# EUROPÄISCHE PATENTSCHRIFT

(11) **EP 1 863 332 B1**
(45) Veröffentlichungstag und Bekanntmachung des Hinweises auf die Patenterteilung: **23.10.2013**
(21) Anmeldenummer: 06722673.8
(22) Anmeldetag: 28.03.2006
(51) Int. Cl.: A01B 45/02

(54) **BODENBEARBEITUNGSGERÄT**
SOIL CULTIVATION DEVICE
APPAREIL DESTINE AU TRAVAIL DU SOL

(30) Priorität: 01.04.2005 DE 102005015068; 04.04.2005 DE 102005015422; 06.05.2005 DE 102005021025
(43) Veröffentlichungstag der Anmeldung: 12.12.2007
(73) Patentinhaber: Wiedenmann GmbH, 89192 Rammingen (DE)
(72) Erfinder: WIEDENMANN, Georg, 89192 Rammingen (DE)
(74) Vertreter: Kastel, Stefan
(86) Internationale Anmeldenummer: PCT/DE2006/000521
(87) Internationale Veröffentlichungsnummer: WO 2006/102869

(56) Entgegenhaltungen:
- EP-A- 0 791 284
- EP-A- 1 108 350
- WO-A-98/05191
- WO-A-02/080651
- DE-A1- 4 323 315

## Beschreibung

Die Erfindung betrifft ein relativ zu dem Boden in einer Bewegungsrichtung bewegbares Bodenbearbeitungsgerät für die Tiefenlockerung von Böden mit den Merkmalen des Oberbegriffes des beigefügten Anspruches 1.

Solche Bodenbearbeitungsgeräte sind in verschiedenen Versionen auf dem Markt und aus einer Vielzahl von Patentdokumenten, wie beispielsweise der DE 196 55 123 C2, der WO 98/05191, der EP 1 040 741 A2, der EP 0 853 869 B1 und auch aus der EP 0 037 595 A1 bekannt.

Das Grundprinzip solcher Geräte ist beispielsweise in der EP 0 853 869 B1 beschrieben.

Diese Bodenbearbeitungsgeräte sind beispielsweise an ein Zugfahrzeug anlenkbar und über den Boden verfahrbar. Beispielsweise kann das Gerät an einen anheb- und absenkbaren Dreipunkt-Anschluss eines Traktors angelenkt werden oder als Anhänger an ein Zugfahrzeug angelenkt werden. Die Bodenbearbeitungsgeräte haben in der Regel einen Geräterahmen (auch Gerätechassis genannt) welcher meist mit Rädern, Rollen oder Walzen oder dergleichen versehen auf dem Boden abrollen kann. Quer zur Bewegungsrichtung (Fahrtrichtung) weisen die hier in Rede stehenden Bodenbearbeitungsgeräte eine ganze Reihe von Werkzeugeinheiten zur Bearbeitung des Bodens auf. Diese Werkzeugeinheiten haben jeweils (wenigstens) einen Tragarm, der an dem Gerätechassis schwenkbar gelagert ist und über eine Antriebseinrichtung wie insbesondere Kurbeltrieb um diese Schwenklagerung auf- und abschwenkbar ist. Am anderen Ende des Tragarmes ist dann ein Stechwerkzeug angelenkt. Hierzu gibt es in der Regel als Stechwerkzeuganlenkungseinrichtung einen Werkzeughalter, in weichen ein Stechwerkzeug wie zum Beispiel eine Zinke oder eine Zinkengruppe oder ein Hohlspoon oder nagelbrettartige Stechwerkzeugeinheiten fest befestigt werden können. Diese Werkzeughalter sind schwenkbar an den Tragarm angelenkt.

Wie sich aus den Fig. 2 und 3 der EP 0 853 869 B1 und der zugehörigen Beschreibung ergibt, treten beim Abwärtsbewegen der Tragarme die Stechwerkzeuge in den Boden ein. Bei Weiterfahren des Bearbeitungswerkzeuges in Fahrtrichtung bleiben die Stechwerkzeuge in der unteren Lage des Tragarmes zunächst im Boden stecken und werden durch den Widerstand relativ zu dem Tragarm verschwenkt. Der Werkzeughalter oder allgemeiner die Stechwerkzeuganlenkungseinrichtung verschwenkt sich dabei relativ zu dem Tragarm. Es gibt hierzu bei allen derzeit bekannten gattungsgemäßen Bodenbearbeitungsgeräten für jedes Stechwerkzeug bzw. für jeden Stechwerkzeughalter einen Anschlag, gegen welchen das Stechwerkzeug bzw. der Stechwerkzeughalter durch eine Vorspanneinrichtung vorgespannt ist. Bei der erläuterten Relativverschwenkung der Stechwerkzeuganlenkungseinrichtung relativ zu dem Tragarm im Verlaufe der Weiterbewegung bei eingestochenem Werkzeug verlässt der Werkzeughalter oder ein daran angelenktes Element den zugehörigen Anschlag. Wird der Tragarm dann wieder nach oben bewegt und das Stechwerkzeug durch diese nach oben Bewegung und die Weiterfahrt des Bodenbearbeitungsgerätes aus dem Boden herausgezogen, dann zieht die Vorspanneinrichtung die Stechwerkzeuganlenkungseinrichtung wieder gegen den Anschlag.

Die Anschläge und Vorspanneinrichtungen sind im Stand der Technik unterschiedlich ausgebildet. Bei der EP 0 853 869 B1 sowie der EP 0 037 595 A1 ist die Vorspanneinrichtung und der Anschlag an einer während des Betriebes längenveränderlichen Teleskopstange ausgebildet, die sich parallel zu den Tragarmen mit diesen auf- und ab bewegt. Bei den aus der DE 196 55 123 C2, der WO 98/05191, der EP 1 108 350 A1 sowie der EP 1 040 741 A2 bekannten Geräten sind die Werkzeughalter über gesonderte Federn gegen einen an einem Einstellhebel vorgesehenen Anschlag vorgespannt.

Es gibt im Stand der Technik verschiedene Anstrengungen, die Relativbewegung zwischen der Stechwerkzeuganlenkungseinrichtung sowie dem Tragarm handzuhaben, nämlich vorzuspannen, zu dämpfen oder zu steuern und einzustellen. Insbesondere ist es bekannt, die Lage der jeweiligen Anschläge zu verstellen, um so den Einstechwinkel, mit welchem das Einstechwerkzeug in den Boden eindringt, einzustellen.

Die bisher bekannten Bewegungshandhabungseinrichtungen, mit denen die geschilderten Handhabungen ermöglicht werden, sind aufwändig in der Konstruktion. Da bei der hier In Rede stehenden Bodenbearbeitung erhebliche Mengen an Schmutz auftreten können - insbesondere im Hohlspoonbetrieb - sind die Handhabungseinrichtungen auch erhöhtem Verschleiß ausgesetzt. Außerdem ist die Arbeitsgeschwindigkeit der bekannten Geräte begrenzt.

Aufgabe der Erfindung ist es, ein Bodenbearbeitungsgerät mit den Merkmalen des Oberbegriffs des beigefügten Anspruches 1 derart zu verbessern, dass unter Beibehaltung der Handhabungsmöglichkeiten für Vorspannung, Kontrolle, Einstellung und dergleichen Handhabung der Relativverschwenkung zwischen Tragarm und Stechwerkzeug eine langlebigere Konstruktion geschaffen wird, mit der dennoch höhere Arbeitsgeschwindigkeiten erzielbar sind

Diese Aufgabe wird durch ein Bodenbearbeitungsgerät mit den Merkmalen des Anspruches 1 gelöst.

Vorteilhafte Ausgestaltungen der Erfindung sind Gegenstand der Unteransprüche.

Das erfindungsgemäße Bodenbearbeitungsgerät zur Tiefenlockerung von Böden hat demnach zum Bilden einer Mehrzahl von Stechwerkzeugeinheiten mehrere mittels einer Antriebseinrichtung auf- und abbewegbare Tragarme, die um eine erste Schwenkachse auf- und abschwenkbar mittelbar oder unmittelbar an dem Geräterahmen oder Gerätechassis angelenkt sind. An jedem Tragarm ist weiter eine Stechwerkzeuganlenkungseinrichtung relativ zu dem Tragarm um eine zweite Schwenkachse schwenkbar angelenkt. An der Stechwerkzeuganlenkungseinrichtung lässt sich ein Stechwerkzeug fest, also relativ zu der Stechwerkzeuganlenkungseinrichtung unbeweglich befestigen. Das Stechwerkzeug kann zum Beispiel integral mit der Stechwerkzeuganlenkungseinrichtung ausgebildet sein oder mit anderen Worten direkt an den Tragarm schwenkbar angelenkt sein. Oder, die Stechwerkzeuganlenkungseinrichtung ist, wie aus dem Stand der Technik gut bekannt, als Stechwerkzeughalter oder dergleichen ausgebildet, an welchen Stechwerkzeughalter verschiedene Arten von Stechwerkzeugen lösbar befestigt werden können.

Die Tragarme sind an einem ersten Bereich, der ein erster Endbereich sein kann, an dem Gerätechaussis oder dem Geräterahmen schwenkbar angelenkt. Die Stechwerkzeuganlenkungseinrichtung ist dann an einem davon beabstandeten zweiten Bereich, der insbesondere der andere Endbereich des Tragarmes sein kann, angelenkt.

Aufgrund der Anlenkung der Stechwerkzeuganlenkungseinrichtung kann so das Stechwerkzeug bei Abwärtsbewegung des Tragarmes in den Boden eingestochen werden und bei Weiterbewegung des Gerätes relativ zu dem Tragarm verschwenkt werden, so dass der Boden unterhalb der Bodenoberfläche, beispielsweise unterhalb einer Grasnarbe, gelockert werden kann. Bei Aufwärtsbewegung und Weiterbewegung des Bodenbearbeitungsgerätes lässt sich ein an der Stechwerkzeuganlenkungseinrichtung angeordnetes Stechwerkzeug wieder aus dem Boden ziehen und relativ zu dem Tragarm wieder um die zweite Schwenkachse in ihre Ausgangslage zurückverschwenken.

Die Stechwerkzeuganlenkungseinrichtung ist somit zumindest bei eingestochenem Werkzeug und Weiterbewegung des Bodenbearbeitungsgerätes in Bewegungsrichtung relativ zu dem Tragarm verschwenkbar. Es geht hier insbesondere darum, diese sozusagen durch die Weiterbewegung erzwungene Relativbewegung zwischen Stechwerkzeuganlenkungseinrichtung und Tragarm handzuhaben. Vorzugsweise soll auch die Relativverschwenklage der Stechwerkzeuganlenkungseinrichtung zu dem Tragarm beim Einstechen gehandhabt werden. Insbesondere bei einer Parallelogrammführung wie sie zum Beispiel aus der EP 0 853 869 B1 sowie der EP 0 037 595 A1 bekannt ist, wird es durch die Parallelogrammführung auch bei angehobenem Tragarm zu einer gewissen relativen Verschwenkung der Stechwerkzeuganlenkungseinrichtung und des Tragarmes kommen, Bei angehobenem Tragarm ist jedoch das entsprechende Stechwerkzeug nicht zur Bodenbearbeitung aktiv, so dass solche durch die Art der jeweiligen Führung des Stechwerkzeuganlenkungseinrichtung bedingte weitere Relativerschwenkungen weniger interessant sind.

Nach der Erfindung ist nun an wenigstens einer der Werkzeugeinheiten, vorzugsweise an mehreren, am meisten bevorzugt an allen Werkzeugeinheiten ein Getriebe vorgesehen, das die Relativbewegung zwischen Stechwerkzeuganlenkungseinrichtung und Tragarm auf nicht mit dem Tragarm auf- und abbewegende Einheiten überträgt. Das Getriebe nimmt demnach die Relativverschwenkung zwischen Tragarm und Stechwerkzeuganlenkungseinrichtung auf und überträgt sie auf wenigsten eine Einheit, die sich gerade nicht mit dem Tragarm auf- und abbewegen.

Dadurch kann man die z. B. bei Einstechen und Weiterfahrt erzwungene Relativbewegung zwischen Tragarm und Stechwerkzeug an anderer Stelle als dem Tragarm abgreifen. Andererseits kann man eine relative Einstechlage zwischen Tragarm und Stehwerkzeug an anderer Stelle als dem Tragarm über das Getriebe bestimmen. Es ist somit nicht mehr notwendig, Vorspanneinrichtungen, Anschläge, Einstelleinrichtungen zum Einstellen der Anschläge, Dämpfungseinrichtungen, Anschlagpuffer oder dergleichen auf oder an dem Tragarm mitbewegend mit diesem anzuordnen. Alle solche Handhabungseinrichtungen, die zum Handhaben der Relativbewegung zwischen Stechwerkzeug und Tragarm dienen, können dann ortsfest am Gerätechassis oder in gegenüber dem Gerätechassis ruhender Lage angeordnet werden.

Dies hat gleich mehrere Vorteile. Zum einen kann dadurch die Masse, die mit dem Tragarm mitbewegt wird, verringert werden. Die einzelnen Handhabungseinheiten werden nicht mehr mit dem Tragarm auf und ab bewegt und unterliegen daher nicht mehr den auf den Tragarm unmittelbar auferlegten Stoß- und Bewegungskräften. Man gewinnt so am Tragarm außerdem bedeutend Platz, da im Bewegungsraum der Tragarme und/oder der Antriebseinrichtung kein Platz mehr für die Handhabungseinrichtungen vorgesehen werden muss. Man kann so die Werkzeugeinheiten selbst dichter nebeneinander anordnen und/oder man kann die Werkzeugeinheiten insgesamt tiefer zum Boden hin anordnen, so dass die Amplitude der Auf- und Abbewegungen reduziert werden kann und der Schwerpunkt erniedrigt werden kann.

Die Handhabungseinrichtungen selbst können an einer Stelle vorgesehen werden, welche außerhalb des Schmutzbereiches liegt, so dass die Handhabungseinrichtungen selbst nicht mehr entsprechend schmutzunanfällig ausgebildet sein müssen.

Dadurch, dass die Handhabungseinrichtungen nicht mehr mitbewegt werden müssen, hat man auch viele Konstruktionsmöglichkeiten für die Handhabungseinrichtungen, welche bisher nicht oder nur mit erheblichen Anstrengungen möglich waren.

So kann man beispielsweise auch weitaus aufwändigere Dämpfungseinrichtungen und auch Fluiddämpfer einsetzen. Diese Fluiddämpfer können auch mit Fluidanschlüssen versehen werden, welche zu einer zentralen Fluidversorgung laufen.

Dadurch, dass man die Handhabungseinrichtungen nicht mehr mitbewegend ausbilden muss, kann man die Tragarme auch schneller auf und ab bewegen, ohne die Dauerhaftigkeit der Handhabungseinrichtungen, welche im Stand der Technik erheblich größeren und vor allem ständig wirkenden Beschleunigungskräften ausgesetzt wären, zu beeinträchtigen.

Das Getriebe selbst, das die Relativbewegung pro Tragarm aus dem mit dem Tragarm mitbewegten Koordinatensystem z. B. in das ruhende Koordinatensystem des Gerätechassis überträgt, kann ganz verschieden ausgebildet sein. Man könnte sich beispielsweise auch ein Kettengetriebe oder eine sich in oder an dem Tragarm befindliche Getriebewelle vorstellen. Das Getriebe sollte bevorzugt so ausgebildet sein, dass die Relativbewegung möglichst unmittelbar und mit möglichst wenig Spiel aus dem mit dem jeweiligen Tragarm mitbewegten System herausführbar ist.

Es wird daher derzeit ein Getriebe bevorzugt, das im wesentlichen durch ein an der Stechwerkzeuganlenkungseinrichtung zur unmittelbaren gemeinsamen Bewegung damit angelenktes Gestänge gebildet wird.

Damit das Gestänge die Relativbewegung mit möglichst wenig Einfluss durch die Bewegung der Tragarme aus dem bewegten System herausführen kann, sollte es die Bewegung möglichst nahe zu der ersten Schwenkachse, wo der Tragarm an dem Geräterahmen angelenkt ist und somit seine Schnittstelle zum ruhenden System hat, führen. Dort im Nahbereich kann dann die Bewegung zwecks Vorspannung, Steuerung, Dämpfung, Einstellung und/oder Kontrolle oder dergleichen Handhabung abgegriffen werden.

Das Getriebe zur Übertragung der Schwenkbewegung zwischen Tragarm und Stechwerkzeuganlenkungseinrichtung aus dem mit dem jeweiligen Tragarm mitbewegten System hinaus ist vorzugsweise im wesentlichen gebildet aus einem etwa parallel zu dem Tragarm wirkenden starren Stangenelement und einem Umlenkelement. Das starre Stangenelement ist mit einem ersten Anlenkpunkt, vorzugsweise an einem Endbereich, an die Stechwerkzeuganlenkungseinrichtung angeschlossen und kann damit jede Bewegung des daran angeordneten Stechwerkzeuges relativ zum Tragarm aufnehmen und ohne Abstriche übertragen. Das Stangenelement muss natürlich nicht unbedingt als eine gerade Stange ausgebildet sein, wichtig ist eine starre Übertragung zwischen zwei Anlenkungspunkten. Jede Einheit, welche diese Bedingung, eine Bewegung eines ersten Anlenkpunktes auf einen davon entfernten zweiten Anlenkpunkt in im wesentlichen starrer Weise zu übertragen, erfüllt, wird hier als starres Stangenelement bezeichnet. Das Stangenelement sollte im Betrieb die starre Übertragung zwischen den Anlenkungspunkten sicherstellen. Um Einstellungen an verschiedene Gegebenheiten zu ermöglichen, kann das Stangenelement aber auch so ausgebildet sein, dass die Wirklänge, also die Strecke zwischen den zwei Anlenkungspunkten, wählbar einstellbar und zum Betrieb dann fixierbar ist. Dies kann auf verschiedene Wege erfolgen. Beispielsweise könnte das Stangenelement als Lochstange mit mehreren Löchern ausgebildet sein, die wahlweise jeweils als Anlenkpunkte im Betrieb dienen können. Es ist auch möglich, dass das Stangenelement teleskopartig aus zwei Elementen gebildet sind, die in wählbarer Länge zueinander fixierbar sind. Oder, das Stangenelement ist spannschraubenartig ausgebindet, mit zwei Gewindeelementen, welche über eine Spannschraube in wählbarer relativer Lage zueinander fixierbar sind.

Das Umlenkelement ist dann an dem zweiten Anlenkungspunkt des starren Stangenelements so angelenkt, dass das Umlenkelement bei durch Relativbewegung von Stechwerkzeuganlenkungseinrichtung und Tragarm initiierter Bewegung des starren Stangenelements mitbewegt wird.

An dem Umlenkelement kann dann diese Relativbewegung abgegriffen werden, also zum Beispiel vorgespannt werden, durch Anschläge begrenzt werden, gedämpft werden, eingestellt werden, kontrolliert werden, geregelt werden oder sonst auf irgendwelche Art und Weise gehandhabt werden.

Demnach hat das Getriebe bevorzugt ein Umlenkelement zum Umlenken der beim Einstechen, Weiterfahren und nach Herausziehen des Stechwerkzeuges initiierten Relativbewegung. Dieses Umlenkelement ist vorzugsweise um eine dritte Schwenkachse schwenkbar an dem Gerätechassis oder Geräterahmen befestigt und somit rahmenfest gelagert. Die dritte Schwenkachse verläuft etwa parallel zur ersten und etwa parallel zur zweiten Schwenkachse. Besonders bevorzugt ist, wenn die dritte Schwenkachse und die erste Schwenkachse um welches der Tragarm schwenkbar an den Rahmen gelagert ist, zusammenfallen, da die erste Schwenkachse die Schnittstelle zwischen bewegtem und ruhenden System ist, und eine Bewegung in dem bewegten System durch ein an dieser Schnittstelle angreifendes Umlenkelement besonders einfach ohne Beeinflussung durch die Tragarmbewegung aus dem bewegten System in das ruhende System übertragbar ist.

Nach einer anderen Konstruktion ist, wie dies grundsätzlich aus dem Stand der Technik bekannt ist, ein mit dem Tragarm sich auf- und abbewegender Anschlag vorgesehen, welcher über ein Getriebe in seiner Lage einstellbar ist, um so einen Einstechwinkel für das jeweilige Stechwerkzeug einzustellen. Es ist weiter eine mit dem Tragarm mitbewegte Vorspanneinrichtung vorgesehen, die die Stechwerkzeuganlenkungseinrichtung gegen den Anschlag vorspannt. Insofern hat diese Ausbildung noch die gleichen Nachteile wie der erläuterte Stand der Technik bezüglich der mitbewegten Handhabungseinrichtungen. Es ist hierbei auch bereits bekannt, die Anschläge mehrerer Werkzeugeinheiten gemeinsam über eine zentrale Verstellung zu verstellen. Hierzu ist das Getriebe mit einem Umlenkelement im Nahbereich der ersten Schwenkachse gelagert, wobei jedes Umlenkelement der gemeinsam zu verstellenden Werkzeugseinheiten an eine gemeinsame Einstechwinkeleinstelleinrichtung angreift.

Problematisch bei einer solchen Ausbildung war bisher, dass die Lager von solchen Umlenkelementen nach relativ kurzer Zeit ausgetauscht werden mussten. Bei jedem Arbeitszyklus gab es beim Zurückschlagen des Stechwerkzeuges gegen den Anschlag einen Schlag auf das Umlenkelement und dessen Lager. Man hat hierzu bisher Gleitlager eingesetzt, welche jedoch nach relativ kurzer Zeit verschlissen waren und von vorneherein einen entsprechend hohen Reibwiderstand aufgewiesen haben. Solche Lager bedingten auch einen hohen Wartungsbedarf. Versuche mit Wälzlagern an bisherigen Konstruktionen scheiterten; die Wälzkörper gingen in relativ kurzer Zeit zu Bruch. Alle diese Nachteile können dadurch vermieden werden, dass das Umlenkelement des Getriebes nicht nur im Nahbereich der ersten Schwenkachse, sondern um die erste Schwenkachse schwenkbar am Geräterahmen gelagert werden. Das Umlenkelement ist somit konzentrisch zu der Lagerung schwenkbar. Man verbindet nun einen der Laufkränze oder der gleichen Lagerelemente zur gemeinsamen Mitbewegung mit den Tragarmen. Dieser Laufkranz oder dergleichen bewegt sich also mit dem Tragarmen mit und wird so ständig in einem gewissen Winkelbereich um die Lagerachse gedreht. Das Dreh- bzw. Schwenklager, an dem das Umlenkelement gelagert ist, ist ständig in Bewegung. Schläge, die über das Stechwerkzeug auf das Umlenkelement übertragen werden, treten so stets an unterschiedlichen Stellen des Lagers auf. Dadurch werden die Schläge weiter über das Lager verteilt, und das Lager frisst sich nicht fest. Man kann so auch ohne Probleme Wälzlager, wie Kugellager, einsetzen, da nicht mehr einzelne Wälzkörper alleine durch diese Schläge betroffen sind.

In bevorzugter Ausbildung ist an dem Tragarm ein fest damit verbundener Bolzen konzentrisch zu der ersten Schwenkachse wegragend ausgebildet, auf welchen ein Wälzlager aufgesetzt ist, auf den wiederum das Umlenkelement des Getriebes sitzt.

Diese Ausbildung erlaubt es, auch in der ansonsten konventionellen Bauart mit mitbewegten Handhabungseinrichtungen größere Arbeitsgeschwindigkeiten zu fahren und dennoch eine höhere Langlebigkeit des Gerätes insgesamt und eine geringere Wartungsanfälligkeit zu schaffen.

Besonders bevorzugt ist eine Kombination, bei der ein Getriebeelement desjenigen Getriebes, welches die Relativbewegung von Stechwerkzeug bzw. Stechwerkzeuganlenkungseinrichtung einerseits und Tragarm andererseits aus dem sich mit dem Tragarm mitbewegenden System herausführt, über ein Dreh- oder Schwenklager am Geräterahmen gelagert ist, wobei dessen Lagerachse mit der ersten Schwenkachse, um welche sich der entsprechende Tragarm verschwenkt, zusammenfällt. Eines der Lagerelemente des Dreh- oder Schwenklagers wird in bevorzugter Ausgestaltung sich mit dem Tragarm mitdrehend ausgebildet, so dass die oben erwähnten Vorteile eines geringeren Lagerverschleißes und einer geringeren Wartungsanfälligkeit für das Lager vermieden ist. Dadurch, dass die Lagerachse mit der ersten Schwenkachse zusammenfällt, kann das Getriebeelement, insbesondere das oben bereits erwähnte Umlenkelement, auch an dem Tragarm selbst gelagert sein, ohne dass es mit diesem mit auf und ab bewegt wird. Die Bewegung des Tragarmes bewirkt nur eine relative Drehung der entsprechenden Lagerelemente mit den oben erwähnten Vorteilen. Die insgesamte Lage des Lagers bleibt jedoch auch bei Bewegung des Tragarmes und trotz der Lagerung des Lagers auf dem Tragarm relativ zu dem Gerätechassis oder Geräterahmen lagestabil. Dadurch kann man an dem so gelagerten Getriebeelement des Getriebes die relative Verschwenkung zwischen Stechwerkzeug und Tragarm abgreifen und handhaben.

Es wird nun wiederum auf weitere vorteilhafte Ausgestaltungen der Erfindung eingegangen.

Insbesondere bei der Ausgestaltung des Getriebes als Gestänge ist bevorzugt, dass dieses Gestänge zusammen mit dem Tragarm und der Stechwerkzeuganlenkungseinrichtung in etwa eine Parallelogrammführung bildet. Durch eine Parallelogrammführung lässt sich, wie dies grundsätzlich bereits aus der EP 0 037 595 A1 bekannt ist, unabhängig von der Lage des Tragarmes ein gleichbleibender Winkel zwischen Stechwerkzeug und Boden erreichen. Dieser Winkel kann durch ein der Stechwerkzeuganlenkung paralleles Umlenkelement, das mit einem parallel zu dem Tragarm geführten starren Stangenelement an der Stechwerkzeuganlenkungseinrichtung angelenkt ist, eingestellt werden. Entsprechend bewirkt die zwangsweise Verschwenkung der Stechwerkzeuganlenkungseinrichtung bei Einstich des Stechwerkzeuges in den Boden und Weiterfahrt eine entsprechende Verschwenkung des Umlenkelementes. Die Lage des Umlenkelementes bleibt aufgrund der zumindest näherungsweise vorhandenen Parallelogrammführung unabhängig von der Lage des Tragarmes und damit im wesentlichen unabhängig von der Bewegung des Tragarmes. Deswegen kann man an dem Umlenkelement durch ein relativ zu dem Geräterahmen oder Gerätechassis ruhend angeordnete Handhabungseinrichtung diese Relativbewegung handhaben.

Die Handhabungseinrichtung dient insbesondere einer Zurückführung des aus dem Boden herausgezogenen Stechwerkzeuges in seine Ursprungslage. Hierzu kann, wie dies zuvor bei den bewegten Systemen geschehen ist, nun im ruhenden System eine Vorspanneinrichtung vorgesehen sein, die das Getriebe, beispielsweise das Umlenkelement, gegen einen Anschlag vorspannt. Auch der Anschlag kann nun im ruhenden System angeordnet werden. Der Anschlag selbst kann in seiner Lage einstellbar sein. Weiter können Puffer zur Dämpfung oder auch aufwändigere Dämpfungseinrichtungen vorhanden sein.

Besonders bevorzugt ist es, diese Handhabungseinrichtung an einem Bereich anzuordnen, welcher sich in Bewegungsrichtung gesehen auf der den Tragarmen entgegengesetzten Seite von der erste Schwenkachse befindet. In dem Beispiel, dass das Bodenbearbeitungsgerät an das Heck eines Traktors angeschlossen wird, wobei sich die Tragarme entgegen der Fahrtrichtung von der ersten Schwenkachse weg erstrecken, ist bevorzugt, die Handhabungseinrichtung an der Vorderseite des Bodenbearbeitungsgerätes, zum Beispiel an der Vorderseite einer Vorderwand des Gerätechassis anzubringen. Dort ist genügend Platz für verschiedene Arten von Handhabungseinrichtungen. Man kann auch aufwändigere Dämpfungssysteme und auch Fluiddämpfer, zum Beispiel Hydraulikdämpfer vorsehen. Auch kann man an die Handhabungseinrichtung, da diese ja nun gegenüber dem Geraterahmen oder Gerätechassis ruhend angeordnet sein kann, verschiedene weitere Anschlüsse, zum Beispiel Fluidanschlüsse - Hydraulikanschluss oder Druckluftanschluss - anbringen. Dies erweitert die Konstruktionsmöglichkeiten für Vorspanneinrichtungen, Anschlagseinrichtungen, Steuerelemente u.s.w., enorm.

Grundsätzlich kann pro Werkzeugeinheit, d. h. pro Tragarmeinheit je ein erfindungsgemäßes Getriebe vorgesehen sein. In einer bevorzugten Ausführung ist an jedes dieser Getriebe eine gesonderte Handhabungseinrichtung, also zum Beispiel eine gesonderte Vorspanneinrichtung und ein gesonderter Anschlag und/oder eine gesonderte Dämpfungseinrichtung angelenkt. Eine Anschlagseinstellung oder eine sonstige Einstellung des Einstechwinkels kann für jede Werkzeugeinheit gesondert vorgesehen sein. Es kann aber auch eine zentrale Winkeleinstelleinrichtung vorgesehen sein, mit der sich alle oder eine Gruppe der Getriebe hinsichtlich der Einstechwinkellager gemeinsam einstellen lassen.

Ein weiterer wesentlicher Vorteil der Erfindung, bei der die Relativbewegung von Stechwerkzeug und Tragarm aus dem mit dem Tragarm mitbewegten System heraus geführt wird und zum Beispiel in ein relativ zu dem Geräterahmen ruhendes System übertragen wird, ist die Möglichkeit einer besseren Geräuschdämmung. Dadurch, dass man Federn, Dämpfer, Anschläge u.s.w. ruhend anordnen kann, kann man die entsprechenden pro Werkzeugeinheit einzeln vorhandenen Einrichtungen auf eine Baugruppe zusammenfassen und gemeinsam Geräusche dämmen. Wenn beispielsweise solche Handhabungseinrichtungen an einer Vorderwand des Bodenbearbeitungsgerätes nebeneinander angeordnet sind, könnte man Insgesamt eine Haube mit geräuschdämmenden Materialien darüber stülpen.

Ausführungsbeispiele der Erfindung werden nachfolgend anhand der beigefügten Zeichnung näher erläutert. Darin zeigen:
- Fig. 1 - 10: vergleichbare Seitenansichten der wesentlichsten Bauelemente von zehn Ausführungsformen von Bodenbearbeitungsgeräten zur Tiefenlockerung von Böden mit einem Teil eines Geräterahmens und mit Werkzeugeinheiten mit angetrieben auf und ab bewegbaren Tragarmen und daran angelenkten Stechwerkzeuganlenkungseinrichtungen.
- Fig. 11: zur Erläuterung einer möglichen Lagerausbildung eine vergleichbare Seitenansicht einer nicht von der Erfindung umfassten Ausführungsform eines Bodenbearbeitungsgeräts.

Die Figuren zeigen jeweils Seitenansichten quer zur Fahrtrichtung gesehen auf wesentliche Bauteile von verschiedenen Ausführungsformen eines Bodenbearbeitungsgerätes für die Tiefenlockerung von Böden. Dabei sind weitere typische Bauteile solcher Geräte, die gut Im Stand der Technik- siehe zum Beispiel die in der Beschreibungseinleitung erwähnten Druckschriften - bekannt sind, der besseren Übersichtlichkeit wegen weggelassen. In der Regel haben die hier in Rede stehenden Bodenbearbeitungsgeräte eine Mehrzahl von Werkzeugeinheiten, die quer zur Fahrtrichtung am Bodenbearbeitungsgerät verteilt angeordnet sind. Eine perspektivische Ansicht einer solchen Verteilung ist beispielsweise in der nicht vorveröffentlichten deutschen Patentanmeldung DE 10 2004 018 101.2 - 23 wiedergegeben, auf die für weitere Einzelheiten der in Rede stehenden Bodenbearbeitungsgeräte ausdrücklich verwiesen wird.

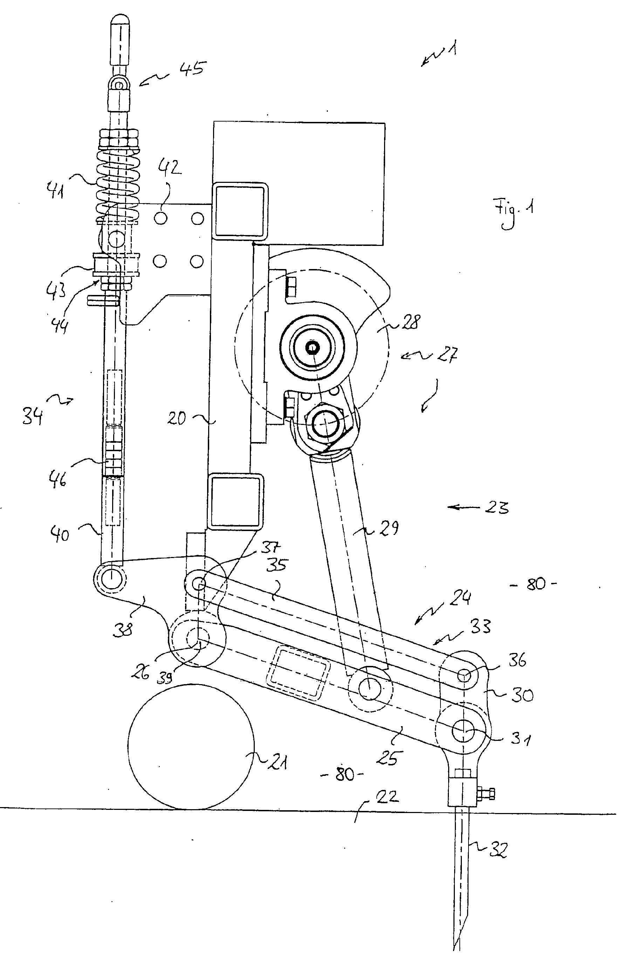

In den Figuren 1 bis 11 sind insgesamt mit den Bezugszeichen 1-11 bezeichnete elf Ausführungsformen von Bodenbearbeitungsgeräten dargestellt. Jedes Bodenbearbeitungsgerät 1-11 hat einen Geräterahmen 20, der mittels Rollen 21 über den Boden 22 in einer Bewegungsrichtung 23 verfahrbar ist.

Es sind mehrere identisch ausgebildete Werkzeugeinheiten 24 in Richtung in die Darstellungsebene hinein nebeneinander vorgesehen, von denen in den Figuren jeweils nur eine dargestellt ist. Jede Werkzeugeinheit 24 hat einen Tragarm 25 - dies kann zum Beispiel eine Stange sein, bevorzugt ist jedoch jeder Tragarm 25 durch mehrere aneinander gekoppelte, zum Beispiel aneinander geschweißte parallele Stangen gebildet. Der Tragarm 25 ist an einem Ende um eine erste Schwenkachse 26 schwenkbar mittelbar oder unmittelbar an dem Geräterahmen 20 derart angelenkt, dass die erste Schwenkachse 26 orststabil zum Geräterahmen 20 ist. An dem Tragarm 25 greift eine Antriebseinrichtung 27 mit einem Kurbeltrieb 28 und einer Antriebsstange 29 an, die den Tragarm 25 um die erste Schwenkachse 26 auf und ab schwenkend antreibt. Am freien Ende des Tragarmes 25 ist eine Stechwerkzeuganlenkungseinrichtung in Form eines Werkzeughalters 30 relativ zu dem Tragarm 25 um eine zweite Schwenkachse 31 schwenkbar angelenkt. Demnach bewegt sich die zweite Schwenkachse 31 und der Werkzeughalter 30 mit dem Tragarm 25 auf und ab. An dem Werkzeughalter 30 ist ein Stechwerkzeug 32 zum Einstechen in dem Boden 22 fest, jedoch auswechselbar, befestigt.

Bei den in den Fig. 1 bis 10 dargestellten Ausführungsformen ist ein Getriebe, hier in Form eines ersten Gestänges 33, vorgesehen, das eine relative Verschwenkung von Tragarm 25 und Werkzeughalter 30 in den Nahbereich der ersten Schwenkachse 26 zum dortigen Abgriff durch eine ruhend zu dem Geräterahmen 20 angeordnete Handhabungseinrichtung 34 führt. Das Gestänge 33 weist jeweils ein starres Stangenelement, hier in Form einer etwa geraden starren, das heißt hier insbesondere nicht längenveränderlichen, Stange 35 mit einem ersten Anlenkpunkt 36 und einem davon in Längsrichtung der Stange 35 entfernten zweiten Anlenkpunkt 37 auf. Die Stange 35 ist mit ihrem an einem Ende befindlichen ersten Anlenkpunkt 36 fest, aber verschwenkbar an den Werkzeughalter 30 angelenkt. Die durch den ersten Anlenkpunkt 36 (in die Zeichenebene hinein) laufende Verschwenkachse, um die die Stange 35 zu dem Werkzeughalter 30 verschwenken kann, liegt mit Abstand parallel zu der zweiten Schwenkachse 31. Die Stange 35 verläuft etwa parallel zu dem Tragarm 25, und der Abstand der Anlenkpunkte 36, 37 entspricht in etwa dem Abstand der ersten Schwenkachse 26 und der zweiten Schwenkachse 31. Damit liegt der zweite Anlenkpunkt 37 relativ zu der ersten Schwenkachse 26 entsprechend 10 wie der erste Anlenkpunkt 36 relativ zu der zweiten Schwenkachse 31. Mit anderen Worten bilden die Anlenkpunkte 36, 37 und die erste und die zweite Schwenkachse 26, 31zumindest näherungsweise ein Parallelogramm.

Bei dem ersten bis zehnten Ausführungsbeispiel 1 - 10 umfasst das durch das erste Gestänge 33 gebildete Getriebe weiter noch ein Umlenkelement 38, das um eine dritte Schwenkachse 39 schwenkbar an dem Gerätechassis 20 gelagert ist. Die dritte Schwenkachse 39 fällt bei allen diesen Ausführungsformen 1 - 5, 7 - 10 mit Ausnahme der sechsten Ausführungsform 6 mit der ersten Schwenkachse 26 zusammen, d.h. das Umlenkelement 38 ist hier konzentrisch zu der Schwenklagerung des Tragarmes 25 gelagert. An dem Umlenkelement 38 greift bei allen Ausführungsformen 1 - 10 gemäß den Fig. 1 bis 10 die Handhabungseinrichtung 34 an.

Bei der in Fig. 1 dargestellten ersten Ausführungsform eines Bodenbearbeitungsgeräts 1 greift an dem Umlenkelement 38 eine in ihrer Länge veränderliche Stange 40 an. Am anderen Ende ist die Stange 40 durch eine Vorspanneinrichtung in Form einer Druckfeder 41 vorgespannt. Die Druckfeder 41 ist mit ihrem anderen Ende an dem Geräterahmen 20 abgestützt. An der Abstützung 42 ist weiter eine Dämpfvorrichtung in Form eines (Gummi-)Puffers 43 vorgesehen. Die Stange 40 ist mit einem Vorsprung 44 oder einer Nase versehen, mit der sie an den so als Anschlag wirkenden Puffer 43 anschlägt. In den Ausführungsformen 1 und 2 ist dieser Vorsprung 44 durch Muttern 44' gebildet. In diese Anlage der Stange 40 mit dem Puffer 43 ist die Stange 40 durch die Druckfeder 41 vorgespannt. Durch eine Kurbel 45 lässt sich eine Spindel 46 im Inneren der Stange 40 drehen und dadurch ist die Länge der Stange 40 einstellbar, und hierdurch wiederum ist die Lage der Anlenkung A der Stänge 40 an dem Umlenkelement 38 relativ zu dem Anschlag-Puffer 43 einstellbar. Dadurch lässt sich die Ruhelage des Umlenkelements 38 und damit die Einstechwinkellage des Stechwerkzeuges 32 relativ zum Boden 22 einstellen, so dass die Längeneinstelleinrichtung 45/46 der Stange 40 als Winkeleinstelleinrichtung wirkt. Im Betrieb wird der Tragarm 25 auf und ab bewegt, ohne die Lage des Umlenkelements 38 zu beeinflussen. Bei Verschwenken des Werkzeughalters 30 jedoch um die zweite Schwenkachse wird diese Bewegung über das Gestänge 33 auf die Stange 40 übertragen, diese bewegt lässt sich bei eingestochenem Stechwerkzeug und Weiterbewegen des Bodenbearbeitungsgeräts 1 in Bewegungsrichtung entgegen die Spannung der Druckfeder 41 nach unten bewegen. Wird das Stechwerkzeug 32 wieder frei gegeben, so zieht die Druckfeder 41 die Stange 40 nach oben wieder in Anlage gegen den Puffer 43, der den Aufprall dämpft. Obwohl die Verschwenkung des Werkzeughalters 30 in dem mit dem Tragarm 25 mitbewegten System erfolgt, kann die Handhabungseinrichtung 34 insgesamt an der Vorderwand des Geräterahmens 20 am Geräterahmen ruhend angeordnet werden.

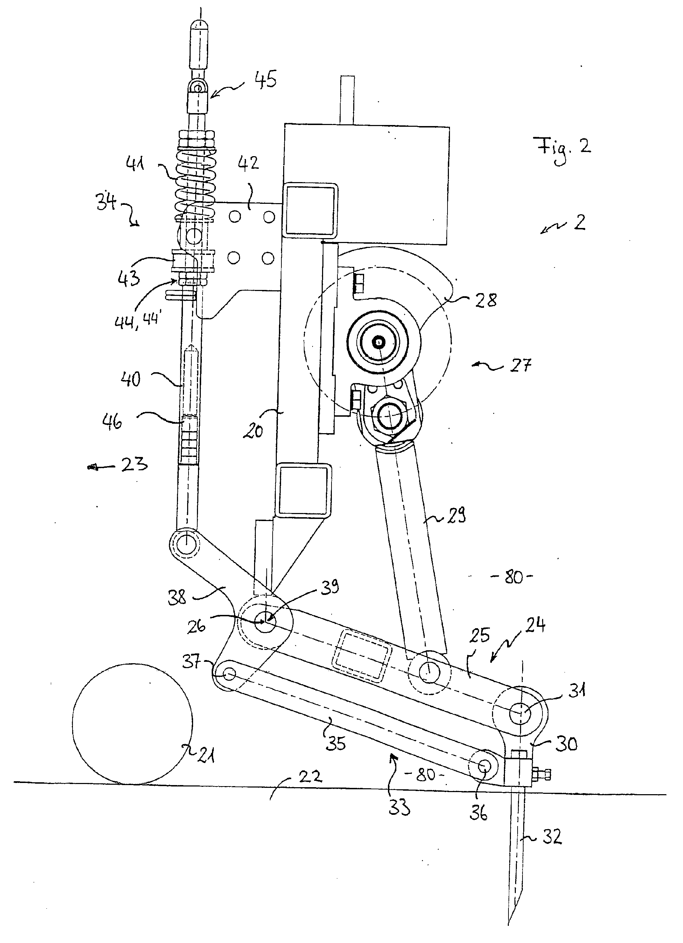

Während bei dem in Fig. 1 dargestellten Bodenbearbeitungsgerät 1 gemäß der ersten Ausführungsform die starre Stange 35 des Gestänges 33 oberhalb des Tragarmes 25 angeordnet ist, verläuft diese Stange 35 bei der in Fig. 2 dargestellten Ausführungsform eines Bodenbearbeitungsgeräts 2 unterhalb des Tragarmes 25. Ansonsten entspricht die zweite Ausführungsform 2 der ersten Ausführungsform 1.

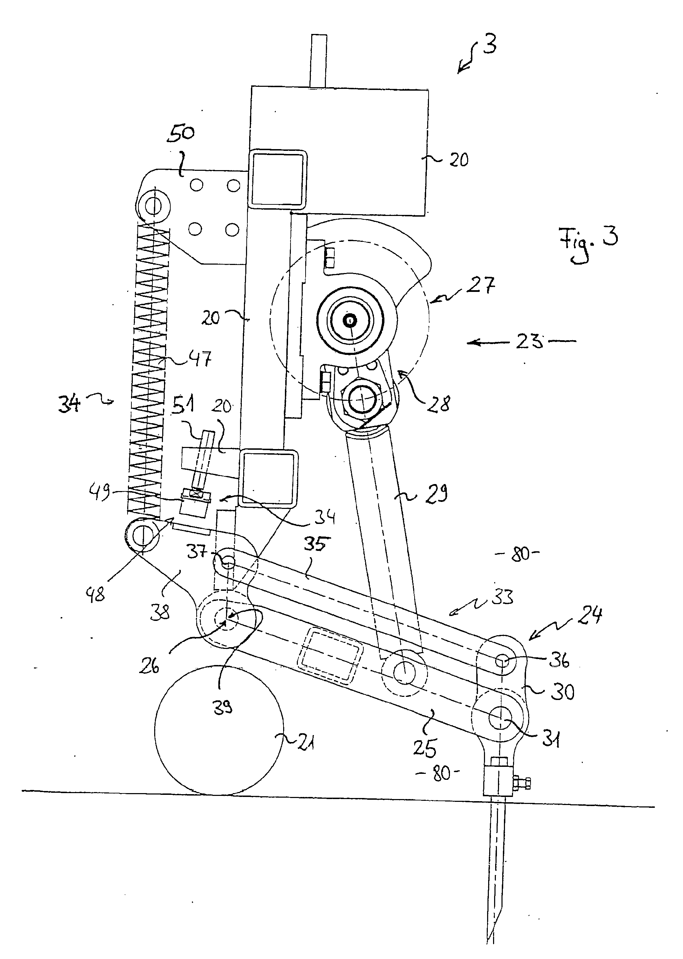

Die in Fig. 3 dargestellte dritte Ausführungsform eines Bodenbearbeitungsgeräts 3 geht bezüglich der Lage der starren Stange 35 des Gestänges 33 wiederum von der ersten Ausführungsform 1 aus und unterscheidet sich von dieser durch die Ausbildung der Handhabungseinrichtung 34. Diese weist bei dem Bodenbearbeitungsgerät 3 gemäß Fig. 3 eine zwischen starr an dem Geräterahmen 20 befestigten Halter 50 und dem Umlenkelement 38 gespannten Zugfeder 47 als Vorspanneinrichtung und einen an einer weiteren Stelle an Geräterahmen 20 festgelegten Anschlag 48 für das Umlenkelement 38 direkt auf. Der Anschlag 48 ist wiederum mit einem Puffer 49 als Dämpfeinrichtung versehen. Er sitzt auf einem Gewindestift 51, der in einer Gewindeöffnung am Geräterahmen 20 eingreift, so dass die Lage des Anschlages 48 zwecks Einstechwinkeleinstellung einstellbar ist.

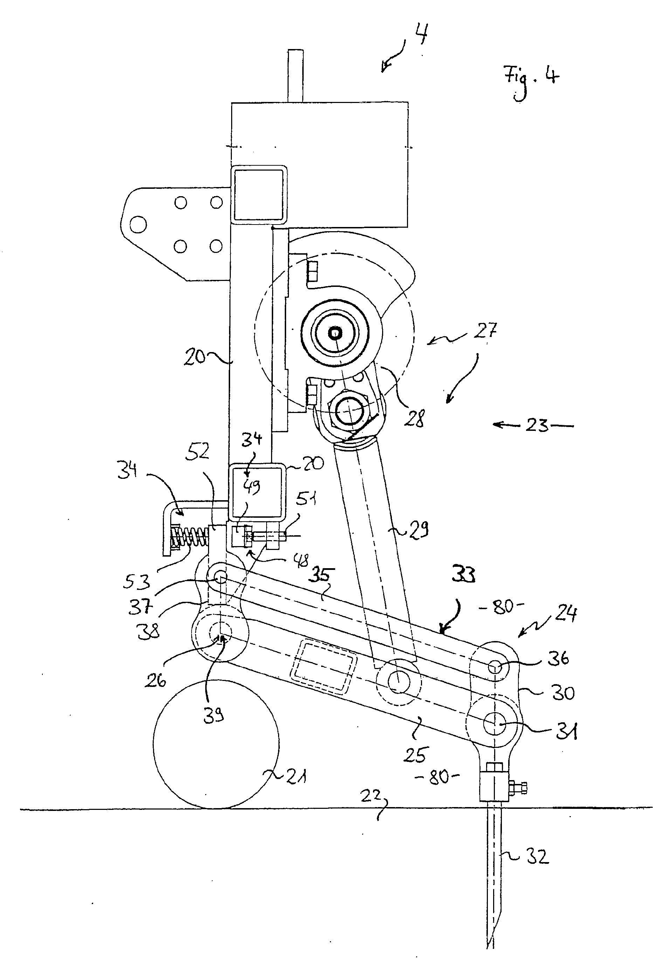

Die in Fig. 4 dargestellte vierte Ausführungsform 4 ist zu der dritten Ausführungsform 3 sehr ähnlich. Hier ist jedoch eine direkt auf einer Seite eines Vorsprungs, Hebelarms oder Auslegers 52 an dem Umlenkelement 38 angreifende Druckfeder 53 als Vorspanneinrichtung vorgesehen, die den Ausleger 52 in Anlage gegen den auf der anderen Seite des Auslegers 52 angreifenden, vom Prinzip her von der dritten Ausführungsform bekannten einstellbaren Anschlag 48 vorspannt.

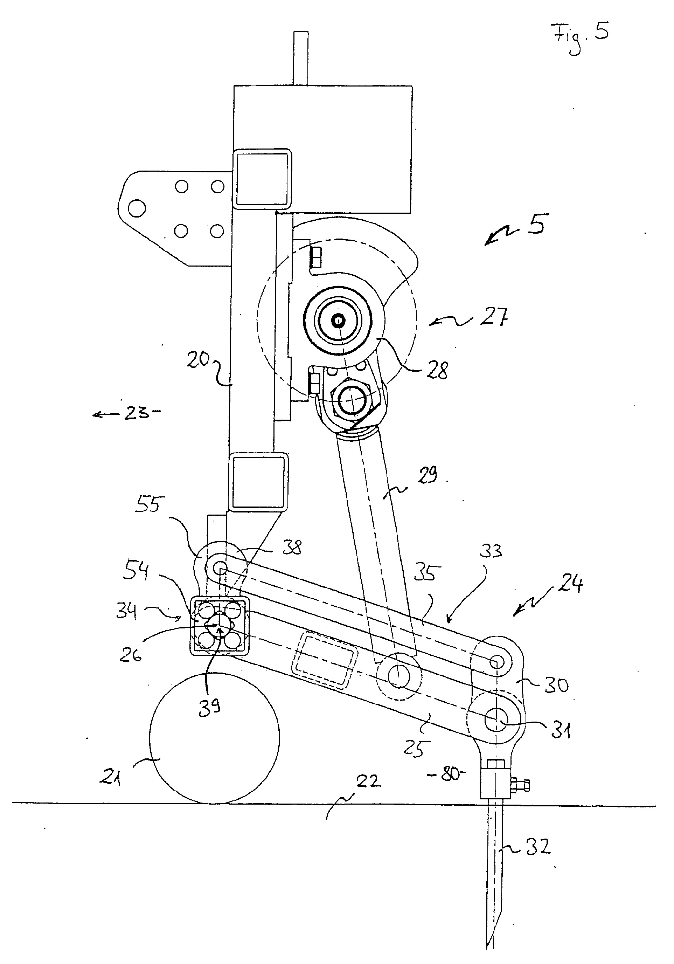

Bei der in Fig. 5 dargestellten fünften Ausführungsform eines Bodenbearbeitungsgeräts 5 ist keine Stechwinkeleinstellung vorgesehen. Diese Ausführungsform ist für einfachere kostengünstigere Versionen interessant. Hier ist das Umlenkelement 38 nicht frei drehend gelagert, sondern elastisch schwenkend gelagert. Das Umlenkelement 38 ist über ein Elastomer 54 schwenkend mit dem Geräterahmen 20 verbunden. Das Elastomer hält das Umlenkelement 38 in der in Fig. 5 gezeigten Ruhelage und lässt das Umlenkelement nach beiden Seiten hin in gewissem Maße um die dritte Schwenkachse 39 verschwenken. Dies geschieht beispielsweise bei jeder im Einstechbetrieb auftretenden Verschwenkung des Werkzeughalters 30 um die zweite Schwenkachse 31. Bei Freigabe des Stechwerkzeuges 32 zieht das Elastomer 54 das Umlenkelement 38 und damit den Werkzeughalter 30 wieder in die Ruhelage zurück.

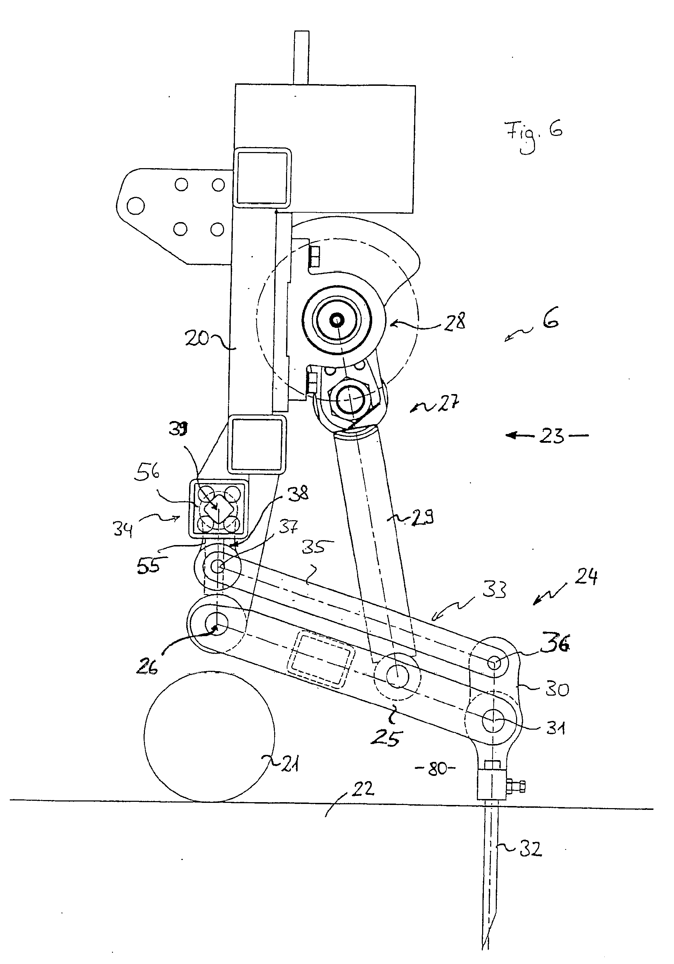

In Fig. 6 ist bei einem sechsten Ausführungsbeispiel 6 dargestellt, dass das in Fig. 5 erläuterte Konstruktionsprinzip auch funktioniert, wenn das Umlenkelement 38 nicht konzentrisch zu der ersten Schwenkachse 26 schwenkbar angelenkt ist. Es genügt, den zweiten Anlenkpunkt 37 elastisch zu lagern. In dem sechsten Ausführungsbeispiel 6 ist hierzu als Umlenkelement ein Hebelelement 55 an einem elastomeren Lager 56 in gewissen Maße elastisch um die hier oberhalb der ersten Schwenkachse 26 verlaufende dritte Schwenkachse 39 verschwenkbar gelagert.

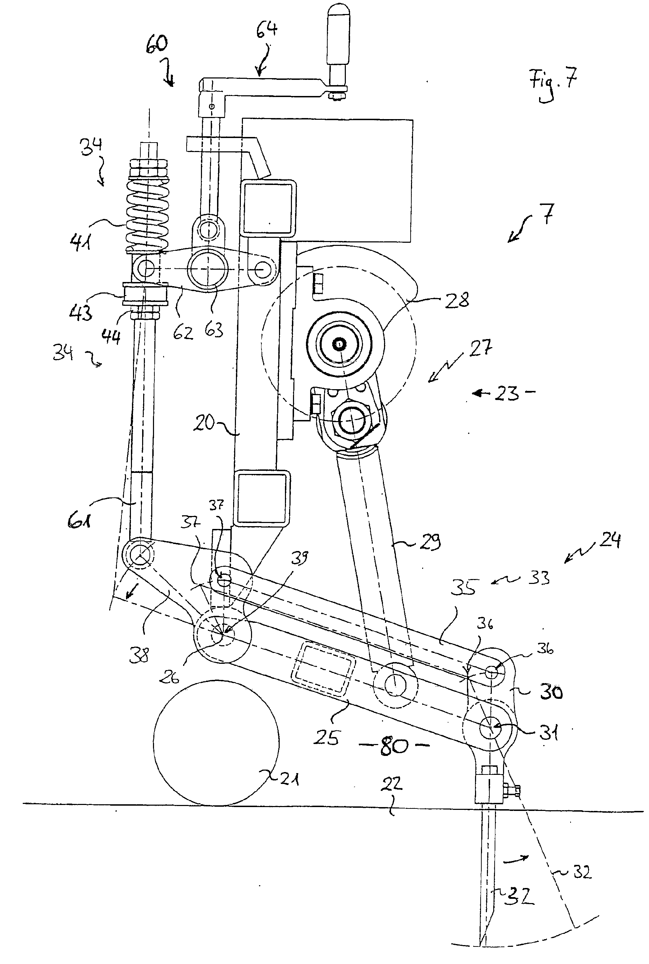

Das in Fig. 7 gezeigte Ausführungsbeispiel eines Bodenbearbeitungsgeräts 7 geht wiederum von dem ersten Ausführungsbeispiel 1 aus und unterscheidet sich von diesem dadurch, dass anstelle einer gesonderten Winkeleinstellung für jede Werkzeugeinheit 24 eine zentrale Winkeleinstelleinrichtung 60 vorgesehen ist, mit welcher die Einstechwinkel bei mehreren Werkzeugeinheiten 24 gemeinsam eingestellt werden können. Hierzu ist die längenveränderliche Stange 40 durch eine längenunveränderliche Stange 61 ersetzt und dafür anstelle der starren Abstützung 42 eine in ihrer Lage relativ zu dem Geräterahmen 20 einstellbare Abstützung 62 vorgesehen. Mit einer sich quer zur Bewegungsrichtung erstreckenden Einstellstange 63 kann man die Abstützungen 62 mehrerer der Stangen 61 gemeinsam einstellen. Hierzu ist die Einstellstange 63 zum Beispiel über Ausleger an dem Geräterahmen 20 schwenkbar gelagert, wobei der Schwenkwinkel über eine Verstellkurbel 64 einstellbar ist. Ansonsten entspricht die siebte Ausführungsform 7 der ersten Ausführungsform 1, wobei auch der Anschlag-Puffer 43 vorgesehen ist.

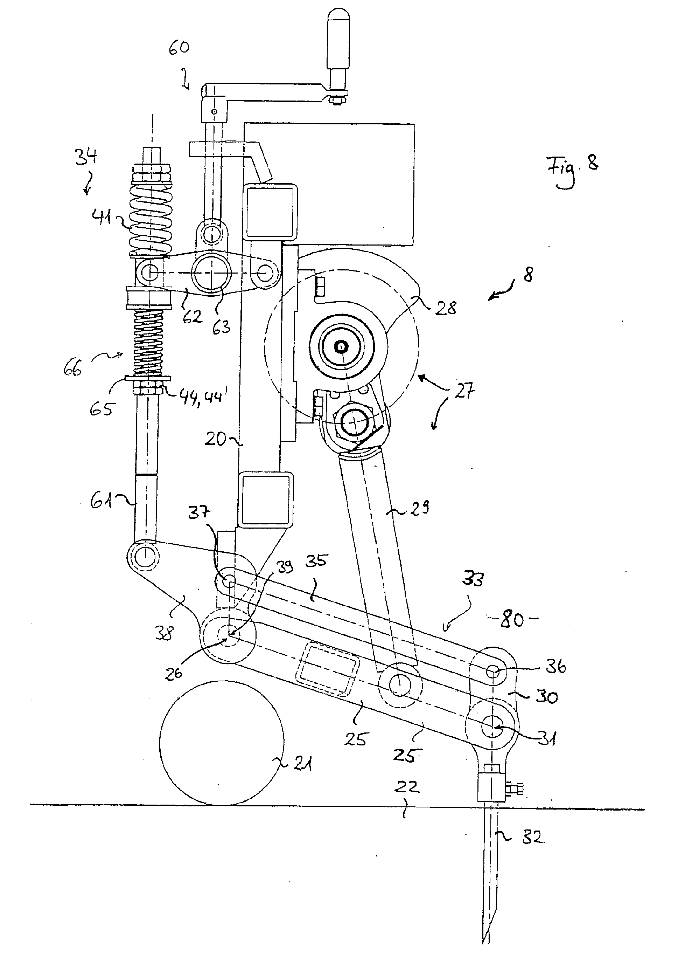

Die in der Fig. 8 dargestellte achte Ausführungsform 8 bildet die eben erläuterte siebte Ausführungsform 7 dahingehend weiter, dass zwischen den Anschlag-Puffer 43 und den hier durch ein Ringscheibenelement 65 gebildeten AnschlagVorsprung 44 an der Stange 61 ein elastisches Element 66 geschaltet ist, das die bei Rückprall des Stechwerkzeuges auftretenden Stöße und insbesondere auch bei Auftreffen des Stechwerkzeug auf Steine oder dergleichen auftretenden Stöße dämpft.

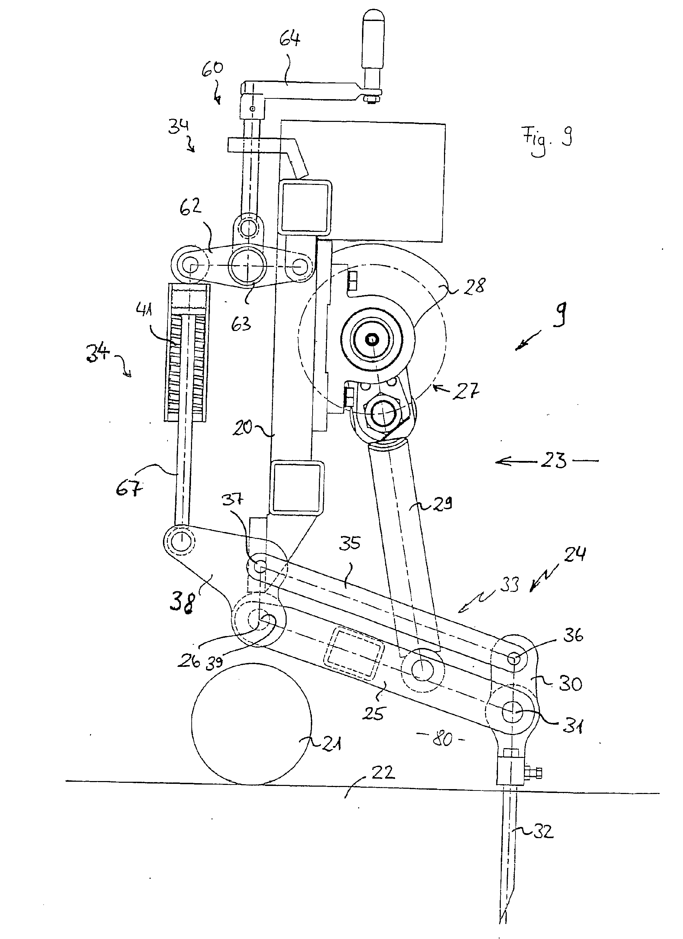

Die in der Fig. 9 gezeigte neunte Ausführungsform 9 geht von der siebten Ausführungsform 7 aus, wobei die dort vorgesehene Verbindung aus der längenunveränderlichen Stange 61 und der Druckfeder 41 durch eine Teleskopstange 67 mit innerer Druckfeder ersetzt ist, wie sie, allerdings als mitbewegte Handhabungseinrichtung, vom Prinzip her aus der EP 0 037 595 A1 bekannt ist.

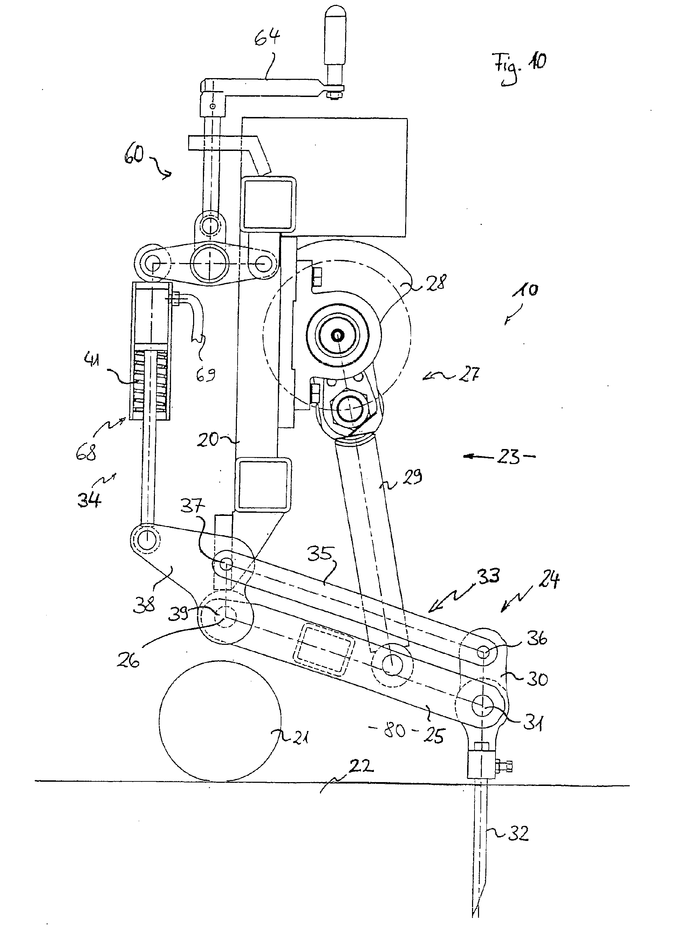

Die in Fig. 10 gezeigte zehnte Ausführungsform 10 bildet die neunte Ausführungsform 9 dahingehend fort, dass die Teleskopstange nun als Fluiddämpfer 68 ausgebildet ist, der mit einem externen Fluidanschluss 69 (pneumatisch oder hydraulisch) ansteuerbar ist.

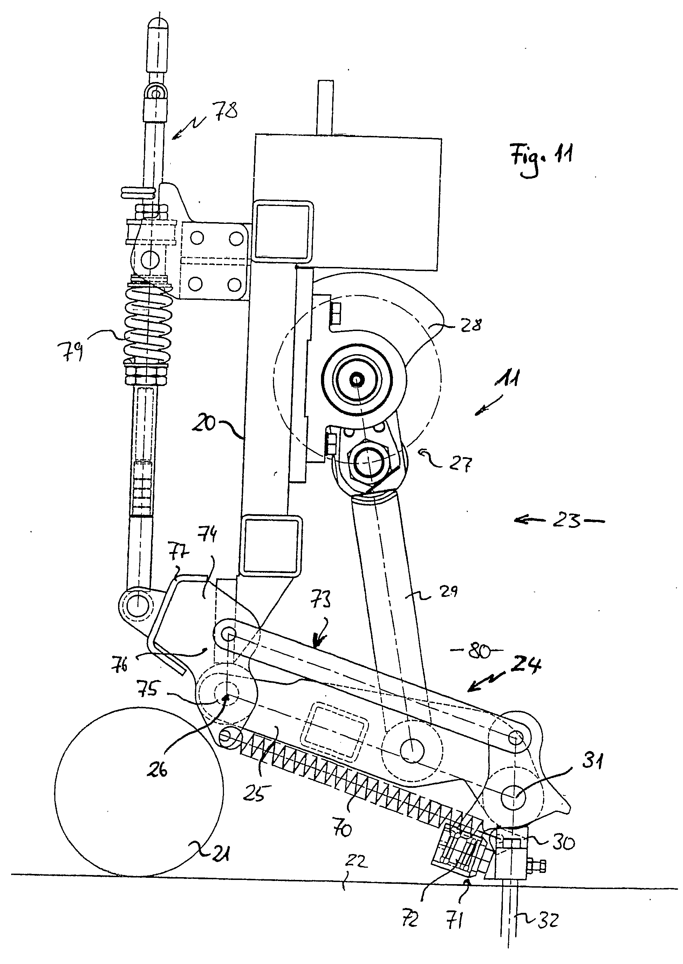

Die in Fig. 11 dargestellte, nicht von der Erfindung umfasste, Ausführungsform 11 unterscheidet sich von den zuvor erläuterten erfindungsgemäßen Ausführungsformen 1 - 10 dadurch, dass - wie bekannt - mitbewegte Handhabungseinrichtungen in Form einer Vorspanneinrichtung 70, eines Anschlags 71 und eines daran untergebrachten mehrlagigen Dämpfungsgliedes 72 vorgesehen sind. Es ist auch ein Gestänge 73 mit einem Umlenkelement 74 vorgesehen. Anders als das erste Gestänge 33 ist jedoch das zweite Gestänge 73 der elften Ausführungsform 11 nicht starr an den Werkzeughalter 30 zur Mitbewegung mit dem Werkzeughalter 30, sondern nur an den Anschlag 71 zur Einstellung desselben angelenkt.

Das Umlenkelement 74 sitzt hier auf einem konzentrisch auf der ersten Schwenkachse 26 angeordneten Kugellager 75, dessen innerer Lagerkranz fest mit dem Tragarm 25 zur Mitdrehung bei Verschwenkung desselben verbunden ist. Hierfür ist an dem Tragarm 25 ein (nicht dargestellter) Bolzen vorgesehen, auf dem das Kugellager 75 sitzt. Dadurch wird die Lagerung einer zentralen Winkelverstelleinrichtung koaxial zentrisch in die erste Schwenkachse gelegt. An jedem Tragarmlager gibt es eine Lagerung dieser Winkelverstelleinrichtung. Der Bolzen dreht sich mit dem Tragarm 25 und schwingt so um seine zentrische Achse. Darauf sitzt dann das Kugellager 75. Auf dem Kugellager 75 sitzt dann jeweils das Umlenkelement 74, hier in Form eines kleinen Armes 76 , an dessen abragenden Ende eine gemeinsam auf alle Umlenkelemente 74 wirkende Verstellstange 77 gelagert ist. Diese Verstellstange 77 lässt sich zentral über eine Kurbel 78 um die erste Schwenkachse 26 schwenkend einstellen.

Der Grund für diese Ausbildung besteht darin, dass man so überhaupt erst Wälzlager wie das Kugellager 75 einsetzen kann. Dadurch, dass die Wälzlager ständig bewegt werden, hat man keine Stöße immer auf die gleiche Stelle des Wälzlagers. Bei den hier auftretenden Stößen werden nicht unerhebliche Kräfte übertragen. Würde man hier das Walzlager unbeweglich machen, so würden diese Stöße immer auf die gleiche Stelle auftreffen. Dies würde zur Zerstörung der Wälzkörper und/oder der Laufringe führen.

Die Arme 76, die an dem Lager 75 konzentrisch zu den Lagern der Tragarme 25 sitzen, ragen bei dem Bodenbearbeitungsgerät 11 nach oben ab. Sie sind über eine quer durch das Bodenbearbeitungsgerät 11 laufende Verbindung, hier die ca. 10 cm breite Blechstange 77, gebildet aus einem U-Blech, miteinander verbunden. Diese gesamte Blechstange 77 wird über die Drehkurbel 78 mit dem Winkel verstellt. Die Umlenkung erfolgt um diese Wälzlager 75. Eine Druckfeder 79, welche an der Kurbel 78 ansetzt, federt die Schläge ab, die durch das Rückprallen der Werkzeughalter 30 gegen den Anschlag 71 erfolgen.

Die bei der elften Ausführungsform erläuterte Lagerung des Umlenkelements 74 lässt sich auch bei den konzentrisch mit der ersten Schwenkachse 26 gelagerten Umlenkelementen 38 oder bei vergleichbaren Getriebeelementen des Getriebes der ersten bis zehnten Ausführungsform einsetzen.

Die anhand der Ausführungsbeispiele erläuterten spezifischen Merkmale lassen sich selbstverständlich beliebig untereinander zu weiteren, hier nicht näher dargestellten Ausführungen kombinieren.

### Bezugszeichenliste:

- 1: Bodenbearbeitungsgerät (erste Ausführungsform)
- 2: Bodenbearbeitungsgerät (zweite Ausführungsform)
- 3: Bodenbearbeitungsgerät (dritte Ausführungsform)
- 4: Bodenbearbeitungsgerät (vierte Ausführungsform)
- 5: Bodenbearbeitungsgerät (fünfte Ausführungsform)
- 6: Bodenbearbeitungsgerät (sechse Ausführungsform)
- 7: Bodenbearbeitungsgerät (siebte Ausführungsform)
- 8: Bodenbearbeitungsgerät (achte Ausführungsform)
- 9: Bodenbearbeitungsgerät (neunte Ausführungsform)
- 10: Bodenbearbeitungsgerät (zehnte Ausführungsform)
- 11: Bodenbearbeitungsgerät (elfte Ausführungsform)
- 20: Geräterahmen
- 21: Rolle
- 22: Boden
- 23: Bewegungsrichtung
- 24: Werkzeugeinheit
- 25: Tragarm
- 26: erste Schwenkachse
- 27: Antriebseinrichtung
- 28: Kurbeltrieb
- 29: Antriebsstange
- 30: Werkzeughalter (Stechwerkzeuganlenkungseinrichtung)
- 31: zweite Schwenkachse
- 32: Stechwerkzeug
- 33: Gestänge (Getriebe)
- 34: Handhabungseinrichtung
- 35: Stange (starres Stangenelement)
- 36: erster Anlenkpunkt
- 37: zweiter Anlenkpunkt
- 38: Umlenkelement
- 39: dritte Schwenkachse
- 40: längenveränderliche Stange
- 41: Druckfeder (Vorspanneinrichtung)
- 42: Abstützung
- 43: Puffer (Dämpfvorrichtung und Anschlag)
- 44: Vorsprung
- 44': Muttern
- 45: Kurbel (Winkeleinstelleinrichtung)
- 46: Spindel (Winkeleinstelleinrichtung)
- 47: Zugfeder (Vorspanneinrichtung)
- 48: Anschlag
- 49: Puffer (Dämpfeinrichtung)
- 50: Halter
- 51: Gewindestift (Winkeleinstelleinrichtung)
- 52: Ausleger an dem Umlenkelement
- 53: Druckfeder (Vorspanneinrichtung)
- 54: Elastomer (Vorspanneinrichtung)
- 55: Hebelelement
- 56: elastomeres Lager
- 60: zentrale Winkeleinstelleinrichtung
- 61: längenunveränderliche Stange
- 62: einstellbare Abstützung
- 63: Einstellstange
- 64: Verstellkurbel
- 65: Ringscheibenelement
- 66: elastisches Element (Dämpfungseinrichtung)
- 67: Teleskopstange
- 68: Fluiddämper
- 69: Fluidanschluss
- 70: Vorspanneinrichtung
- 71: Anschlag
- 72: Dämpfungsglied
- 73: Gestänge
- 74: Umlenkelement
- 75: Kugellager
- 76: Arm
- 77: Verstellstange
- 78: Kurbel
- 79: Druckfeder
- 80: Schmutzbereich
- A: Anlenkung

## Patentansprüche

1. Relativ zu dem Boden (22) In einer Bewegungsrichtung (23) bewegbares Bodenbearbeitungsgerät (1-10) für die Tiefenlockerung von Böden mit:
einem Gerätechassis oder Geräterahmen (20),
einer Reihe von Tragarmen (25), von denen jeder mit einem ersten Bereich, insbesondere einem ersten Endbereich, an dem Gerätechassis oder dem Geräterahmen (20) um eine erste Schwenkachse (26) auf und ab schwenkbar angelenkt ist, und
einer Antriebseinrichtung (27) zum Antreiben der Auf- und Abbewegung der Tragarme (25),
je einer Stechwerkzeuganlenkungseinrichtung (30) zum fest und unbeweglich mit der Stechwerkzeuganlenkungseinrichtung verbundenen Anlenken eines Stechwerkzeuges (32) an einem zweiten Bereich, insbesondere einem zweiten Endbereich, jedes Tragarmes (25), wobei die Stechwerkzeuganlenkungseinrichtung an dem Tragarm relativ zu dem Tragarm um eine zweite Schwenkachse (31) schwenkbar derart angelenkt ist, dass ein an der Stechwerkzeuganlenkungseinrichtung (30) befestigtes Stechwerkzeug (32) bei Abwärtsbewegung des zugeordneten Tragarmes (25) in den Boden (22) einstechbar ist und dass die Stechwerkzeuganlenkungseinrichtung zumindest bei eingestochenem Stechwerkzeug und Weiterbewegung des Bodenbearbeitungsgeräts (1-10) in Bewegungsrichtung relativ zu dem Tragarm verschwenkt wird,
**dadurch gekennzeichnet,**
**dass** wenigstens ein an die Stechwerkzeuganlenkungseinrichtung (30) zur unmittelbaren Mitbewegung mit der Stechwerkzeuganlenkungseinrichtung (30) fest verbunden angelenktes Getriebe (33) vorgesehen ist, das die Relativbewegungen zwischen Stechwerkzeuganlenkungseinrichtung (30) und Tragarm (25) einschließlich der bei eingestochenem Stechwerkzeug und Weiterbewegung des Bodenbearbeitungsgeräts (1 - 10) in Bewegungsrichtung erfolgenden Relativbewegung nahe zu der ersten Schwenkachse (26) führt und auf wenigstens eine sich nicht mit dem Tragarm mit auf und ab bewegende Einheit (34) abgreifbar überträgt.

2. Bodenbearbeitungsgerät nach Anspruch 1,
**dadurch gekennzeichnet,**
**dass** das Getriebe ein an der Stechwerkzeuganlenkungseinrichtung (30) zur gemeinsamen Bewegung angelenktes Gestänge (33) aufweist, das die Schwenkbewegung der Stechwerkzeuganlenkungseinrichtung relativ zum Tragarm in einen Nahbereich nahe der ersten Schwenkachse (26) zur dortigen Vorspanhung, Steuerung, Dämpfung, Einstellung und/oder Kontrolle oder dergleichen Handhabung der Schwenkbewegung zwischen Tragarm und Stechwerkzeuganlenkungseinrichtung führt.

3. Bodenbearbeitungsgerät nach einem der voranstehenden Ansprüche,
**dadurch gekennzeichnet,**
**dass** das Getriebe (33) zur Übertragung der Schwenkbewegung zwischen Tragarm und Stechwerkzeuganlenkungseinrichtung an der Stechwerkzeuganlenkungseinrichtung (30) zur gemeinsamen Bewegung damit angelenkt ist, wobei das Getriebe wenigstens gebildet ist aus:
einem in Schwenkachsrichtung gesehen etwa parallel zu dem Tragarm wirkenden, im Betrieb starren Stangenelement (35), welches mit einem ersten Anlenkungspunkt (36) an die Stechwerkzeuganlenkungseinrichtung zur gemeinsamen Bewegung angelenkt ist, und
einem Umlenkelement (38), das an einem zweiten Anlenkungspunkt (37) des starren Stangenelements zur unmittelbaren gemeinsamen Bewegung damit angelenkt ist, um die Relativbewegung zwischen Tragarm und Stechwerkzeuganlenkungseinrichtung über das Umlenkelement vorzuspannen, zu steuern, zu dämpfen, einzustellen und/oder zu kontrollieren oder sonst wie handzuhaben.

4. Bodenbearbeitungsgerät nach Anspruch 3,
**dadurch gekennzeichnet, dass** die Wirklänge des starren Stangenelements wählbar einstellbar und zum Betrieb fixierbar ist.

5. Bodenbearbeitungsgerät nach einem der voranstehenden Ansprüche,
**dadurch gekennzeichnet,**
**dass** das Getriebe ein Umlenkelement (38) zum Umlenken der Relativbewegung hat, das um eine etwa parallel zur ersten Schwenkachse (26) und etwa parallel zur zweiten Schwenkachse verlaufende dritte Schwenkachse (39) schwenkbar an dem Grätechassis bzw. dem Geräterahmen (20) befestigt ist.

6. Bodenbearbeitungsgerät nach Anspruch 5,
**dadurch gekennzeichnet,**
**dass** die dritte Schwenkachse (39) etwa konzentrisch zu der ersten Schwenkachse (26) verläuft.

7. Bodenbearbeitungsgerät nach einem der voranstehenden Ansprüche,
**dadurch gekennzeichnet,**
**dass** das Getriebe wenigstens ein Dreh- oder Schwenklager (75) mit mit der ersten Schwenkachse (26) zusammenfallender Lagerachse zum Lagern des Getriebes (33) relativ zum Geräterahmen (20) hat, wobei das Lager (75) zwei relativ zueinander drehbare Lagerelemente aufweist, von denen eines an den zugeordneten Tragarm (25) zur gemeinsamen Bewegung damit angeschlossen ist.

8. Bodenbearbeitungsgerät nach einem der Ansprüche 3 bis 6 und nach Anspruch 7,
**dadurch gekennzeichnet,**
**dass** das Umlenkelement (34) an dem Dreh- oder Schwenklager (75) gelagert ist.

9. Bodenbearbeitungsgerät nach einem der voranstehenden Ansprüche,
**dadurch gekennzeichnet,**
**dass** das Getriebe (33) zusammen mit dem Tragarm (25) und der Stechwerkzeuganlenkungseinrichtung (30) in etwa eine Parallelogrammführung bildet, an der die Relativbewegung zwischen Tragarm und Stechwerkzeuganlenkungseinrichtung (30) im wesentlichen unabhängig von der Stellung und/oder der Auf- und Abbewegung des Tragarmes abgreifbar ist.

10. Bodenbearbeitungsgerät nach Anspruch 9 und nach Anspruch 3,
**dadurch gekennzeichnet,**
**dass** die Stechwerkzeuganlenkungseinrichtung (30), der Tragarm (25), das Stangenelement (35) und das Umlenkelement (38) zumindest näherungsweise eine Parallelogrammführung bilden, wobei sich das Umlenkelement bei einer Schwenkbewegung der Stechwerkzeuganlenkungseinrichtung mitbewegt, so dass diese Schwenkbewegung an dem Umlenkelement abgreifbar ist.

11. Bodenbearbeitungsgerät nach einem der voranstehenden Ansprüche,
**dadurch gekennzeichnet,**
**dass** an dem Getriebe (33), insbesondere an dem Umlenkelement (38), eine Handhabungseinrichtung (34) zur Handhabung, insbesondere Vorspannung, Steuerung, Kontrolle, Regelung, Begrenzung, Einstellung und/oder Dämpfung, der Relativbewegung zwischen Tragarm (25) und Stechwerkzeuganlenkungseinrichtung (30) angreift.

12. Bodenbearbeitungsgerät nach Anspruch 11,
**dadurch gekennzeichnet,**
**dass** die Handhabungseinrichtung (34) außerhalb eines Schmutzbereiches (80) angeordnet ist, der einer Verschmutzung durch bei der Bodenbearbeitung anfallenden Schmutz ausgesetzt ist.

13. Bodenbearbeitungsgerät nach Anspruch 11 oder 12,
**dadurch gekennzeichnet,**
**dass** die Handhabungseinrichtung (34) sich nicht mit dem Tragarm mitbewegend, sondern ortsfest relativ zum Grätechassis oder Geräterahmen (20) gelagert ist.

14. Bodenbearbeitungsgerät nach einem der Ansprüche 11 bis 13,
**dadurch gekennzeichnet,**
**dass** die Handhabungseinrichtung (34) außerhalb eines Tragarmbewegungsraumes angeordnet ist, der sich zur quer Bewegungsrichtung durchgehend durch das Gerät erstreckend durch die Auf- und Abbewegung der Tragarme (25) und der daran angelenkten Stechwerkzeuganlenkungseinrichtungen (30) aufgespannt wird.

15. Bodenbearbeitungsgerät nach einem der Ansprüche 11 bis 14,
**dadurch gekennzeichnet,**
**dass** die Handhabungseinrichtung (34) außerhalb eines Bewegungsraumes der Antriebseinrichtung (27) angeordnet ist.

16. Bodenbearbeitungsgerät nach einem der Ansprüche 11 bis 15,
**dadurch gekennzeichnet,**
**dass** die Handhabungseinrichtung (34) eine Vorspanneinrichtung (41, 47, 53, 54, 56, 67, 68) zum Vorspannen des Gestänges (33), insbesondere des Umlenkelements (38), und damit der Stechwerkzeuganlenkungseinrichtung (30) und einen Anschlag (48, 43) aufweist, gegen den wirkend das Gestänge, insbesondere das Umlenkelement, durch die Vorspanneinrichtung vorgespannt wird.

17. Bodenbearbeitungsgerät nach einem der Ansprüche 11 bis 16,
**dadurch gekennzeichnet,**
**dass** die Handhabungseinrichtung (34) eine Winkeleinstelleinrichtung (51, 45, 46, 60) zum Einstellen eines Einstechwinkels für das zugeordnete Stechwerkzeug (32) hat.

18. Bodenbearbeitungsgerät nach Anspruch 17,
**dadurch gekennzeichnet,**
**dass** die Winkeleinstelleinrichtung (60) auf alle oder eine Gruppe der Stechwerkzeuganlenkungseinrichtungen (30) wirkt.

19. Bodenbearbeitungsgerät nach einem der Ansprüche 11 bis 18,
**dadurch gekennzeichnet,**
**dass** die Handhabungseinrichtung (34) ein Dämpfungselement (49, 66, 43, 68) zum Dämpfen der Relativbewegung nach Herausziehen des Stechwerkzeuges vom Boden aufweist.

20. Bodenbearbeitungsgerät nach Anspruch 19,
**dadurch gekennzeichnet,**
**dass** das Dämpfungselement einen Fluiddämpfer (68) aufweist.

21. Bodenbearbeitungsgerät nach Anspruch 20,
**dadurch gekennzeichnet,**
**dass** der Fluiddämpfer (68) zur Einstellung an einen Fluidanschluss (69) angeschlossen Ist.

22. Bodenbearbeitungsgerät nach einem der voranstehenden Ansprüche,
**dadurch gekennzeichnet,**
**dass** es keine sich mit dem Tragarm (25) mit auf und abbewegende Vorspanneinrichtung zum Vorspannen der Stechwerkzeuganlenkungseinrichtung relativ zum Tragarm und keinen sich mit dem Tragarm mit auf und ab bewegenden Anschlag für die Stechwerkzeuganlenkungseinrichtung aufweist.

23. Bodenbearbeitungsgerät nach Anspruch 7,
**dadurch gekennzeichnet,**
**dass** das Lager ein Wälzlager (75) ist, wobei ein innerer Laufkranz auf einem von dem Tragarm konzentrisch zu der ersten Schwenkachse (26) wegragenden Bolzen aufgesetzt ist, der sich bei Verschwenkung des Tragarms um die erste Schwenkachse entsprechend mit dreht und wobei auf einem äußeren Laufkranz ein Umlenkelement (74, 38) des Getriebes gelagert ist, so dass es, insbesondere zum Verstellen der Lage des Anschlages, um die erste Schwenkachse schwenkbar ist.

## Claims

1. Soil cultivation device (1-10) movable relative to the soil (22) in a direction of movement (23), for the deep loosening of soil, comprising:
- a device chassis or device frame (20),
- a series of carrier arms (25), each of which is hinged by a first region, particularly a first end region, to the device chassis or the device frame (20), so as to be pivotable up and down about a first swivel axis (26), and
- a drive device (27) for driving the up and down movement of the carrier arms (25),
- a penetrating tool linking device (30) for hinging a penetrating tool (32) at a second region, particularly a second end region, of each carrier arm (25) so that it is fixedly and immovably connected to the penetrating tool linking device, the penetrating tool linking device being hinged to the carrier arm so as to be pivotable relative to the carrier arm about a second swivel axis (31), such that a penetrating tool (32) attached to the penetrating tool linking device (30) can be driven into the soil (22) with the downward movement of the associated carrier arm (25), and in that the penetrating tool linking device is pivoted relative to the carrier arm at least when the penetrating tool has been pushed in and the soil cultivation device (1-10) has advanced further in the direction of movement,
**characterised in that**
at least one mechanism (33) is provided that is fixedly coupled to the penetrating tool linking device (30) for moving directly with the penetrating tool linking device (30), and this mechanism (33) guides the relative movements between the penetrating tool linking device (30) and the carrier arm (25), including the relative movement that occurs when the penetrating tool has been driven in and the soil cultivation device (1-10) has advanced further in the direction of movement, closely to the first swivel axis (26) and transmits them to at least one unit (34) that does not move up and down with the carrier arm.

2. Soil cultivation device according to claim 1, **characterised in that** the mechanism comprises a linkage (33) hinged to the penetrating tool linking device (30), which guides the pivoting movement of the penetrating tool linking device relative to the carrier arm in a region close to the first swivel axis (26) in order there to pre-tension, govern, attenuate, adjust and/or control or otherwise manage the pivoting movement between the carrier arm and the penetrating tool linking device.

3. Soil cultivation device according to one of the preceding claims, **characterised in that** for transmitting the pivoting movement between the carrier arm and the penetrating tool linking device the mechanism (33) is hinged to the penetrating tool linking device (30) for moving jointly therewith, the mechanism being formed from at least:
a rod element (35) that is rigid during operation, acting substantially parallel to the carrier arm viewed in the direction of the swivel axis, which is hinged at a first articulation point (36) to the penetrating tool linking device for joint movement therewith, and
a guide element (38) which is hinged at a second articulation point (37) of the rigid rod element for direct joint movement therewith, in order to pre-tension, govern, attenuate, adjust and/or control or otherwise manage the relative movement between the carrier arm and the penetrating tool linking device.

4. Soil cultivation device according to claim 3, **characterised in that** the effective length of the rigid rod element is adjustable as required and fixable for operation.

5. Soil cultivation device according to one of the preceding claims, **characterised in that** the mechanism has a guide element (38) for guiding the relative movement, said guide element (38) being attached to the device chassis or the device frame (20) so as to be pivotable about a third swivel axis (39) extending substantially parallel to the first swivel axis (26) and substantially parallel to the second swivel axis.

6. Soil cultivation device according to claim 5, **characterised in that** the third swivel axis (39) extends substantially concentrically with respect to the first swivel axis (26).

7. Soil cultivation device according to one of the preceding claims, **characterised in that** the mechanism comprises at least one rotary or swivel bearing (75) having a bearing axis that coincides with the first swivel axis (26), for mounting the mechanism (33) relative to the device frame (20), the bearing (75) comprising two bearing elements that are rotatable relative to one another, one of which is connected to the associated carrier arm (25) for joint movement therewith.

8. Soil cultivation device according to one of claims 3 to 6 and according to claim 7, **characterised in that** the guide element (34) is mounted on the rotary or swivel bearing (75).

9. Soil cultivation device according to one of the preceding claims, **characterised in that** the mechanism (33) forms, together with the carrier arm (25) and the penetrating tool linking device (30), a kind of parallelogram guide on which the relative movement between the carrier arm and the penetrating tool linking device (30) can be transmitted substantially independently of the position and/or the up and down movement of the carrier arm.

10. Soil cultivation device according to claim 9 and according to claim 3, **characterised in that** the penetrating tool linking device (30), the carrier arm (25), the rod element (35) and the guide element (38) at least approximately form a parallelogram guide, the guide element moving with the penetrating tool linking device as it pivots, so that this swivelling movement can be transmitted on the guide element.

11. Soil cultivation device according to one of the preceding claims, **characterised in that** a managing device (34) acts on the mechanism (33), particularly on the guide element (38), for managing, particularly pre-tensioning, governing, controlling, regulating, limiting, adjusting and/or attenuating, the relative movement between the carrier arm (25) and the penetrating tool linking device (30).

12. Soil cultivation device according to claim 11, **characterised in that** the managing device (34) is arranged outside a dirty region (80) that is exposed to soiling by dirt produced during the soil cultivation.

13. Soil cultivation device according to claim 11 or 12, **characterised in that** the managing device (34) is mounted so as not to move with the carrier arm but to be fixed relative to the device chassis or device frame (20).

14. Soil cultivation device according to one of claims 11 to 13, **characterised in that** the managing device (34) is arranged outside a carrier arm moving space that extends continuously through the device at right angles to the direction of movement and is defined by the up and down movement of the carrier arms (25) and of the penetrating tool linking devices (30) linked thereto.

15. Soil cultivation device according to one of claims 11 to 14, **characterised in that** the managing device (34) is arranged outside a moving space for the drive device (27).

16. Soil cultivation device according to one of claims 11 to 15, **characterised in that** the managing device (34) comprises a pre-tensioning device (41, 47, 53, 54, 56, 67, 68) for pre-tensioning the linkage (33), particularly the guide element (38), and hence the penetrating tool linking device (30), and comprises a stop (48, 43) against which the linkage, particularly the guide element, is effectively braced by the pre-tensioning device.

17. Soil cultivation device according to one of claims 11 to 16, **characterised in that** the managing device (34) has an angle adjusting device (51, 45, 46, 60) for adjusting an angle of penetration for the associated penetrating tool (32).

18. Soil cultivation device according to claim 17, **characterised in that** the angle adjusting device (60) acts on all or a number of the penetrating tool linking devices (30).

19. Soil cultivation device according to one of claims 11 to 18, **characterised in that** the managing device (34) comprises a damping element (49, 66, 43, 68) for damping the relative movement after the penetrating tool has been pulled out of the ground.

20. Soil cultivation device according to claim 19, **characterised in that** the damping element comprises a fluid damper (68).

21. Soil cultivation device according to claim 20, **characterised in that** the fluid damper (68) is connected for adjustment to a fluid connection (69).

22. Soil cultivation device according to one of the preceding claims, **characterised in that** it does not comprise any pre-tensioning device that moves up and down with the carrier arm (25) for pre-tensioning the penetrating tool linking device relative to the carrier arm, nor does it comprise a stop that moves up and down for the penetrating tool linking device.

23. Soil cultivation device according to claim 7, **characterised in that** the bearing is a roller bearing (75), an inner race being fitted on a bolt that projects away from the carrier arm concentrically with the first swivel axis (26), said bolt rotating accordingly about the first swivel axis during the swivelling of the carrier arm, and a guide element (74, 38) of the mechanism being mounted on an outer race, so as to be pivotable about the first swivel axis, particularly for adjusting the position of the stop.

## Revendications

1. Appareil destiné au travail du sol (1-10) déplaçable par rapport au sol (22) dans une direction de déplacement (23) pour permettre d'ameublir le sol en profondeur comportant :
un châssis ou un bâti d'appareil (20),
une rangée de bras supports (25) dont chacun est articulé de façon à pouvoir pivoter vers le haut et vers le bas autour d'un premier axe de pivotement (26), sur le châssis ou le bâti de l'appareil (20) par une première zone, en particulier une première zone d'extrémité, et
un dispositif d'entrainement (27) permettant de commander le déplacement des bras supports (25) vers le haut et vers le bas,
un dispositif d'articulation d'un outil perforateur (30) respectif permettant d'articuler un outil perforateur (32) fixé solidairement à ce dispositif d'articulation, au niveau d'une seconde zone, en particulier d'une seconde zone d'extrémité de chacun des bras support (25), le dispositif d'articulation d'un outil perforateur étant articulé sur le bras support, relativement à ce bras, autour d'un second axe de pivotement (31) de sorte qu'un outil perforateur (32) fixé sur le dispositif d'articulation d'un outil perforateur (30) puisse être enfoncé dans le sol (22) lors d'un déplacement vers le bas du bras support (25) associé et que, au moins lorsque l'outil perforateur est enfoncé, et que l'appareil de travail du sol (1-10) poursuit son déplacement, le dispositif d'articulation d'un outil perforateur pivote par rapport au bras support dans la direction de déplacement,
**caractérisé en ce qu'**
il est prévu au moins une transmission (33) articulée solidairement sur le dispositif d'articulation d'un outil perforateur (30) pour permettre son déplacement associé avec ce dispositif (30), qui guide les mouvements relatifs entre le dispositif d'articulation d'un outil perforateur (30) et le bras support (25), y compris le mouvement relatif se produisant dans la direction de déplacement lorsque l'outil perforateur est enfoncé et que l'appareil de travail du sol (1-10) poursuit son déplacement, à proximité du premier axe de pivotement (26), et les transmet en les prélevant à au moins une unité (34) se déplaçant vers le haut et bas de façon non solidaire du bras support.

2. Appareil destiné au travail du sol conforme à la revendication 1,
**caractérisé en ce que**
la transmission comporte une tringlerie (33) articulée sur le dispositif d'articulation d'un outil perforateur (30) pour permettre un déplacement commun, et qui guide le pivotement du dispositif d'articulation d'un outil perforateur relativement au bras support dans une zone située à proximité du premier axe de pivotement (26), pour permettre de pré-contraindre, commander, amortir, régler et/ou commander localement ou effectuer une manipulation similaire du pivotement entre le bras support et le dispositif d'articulation d'un outil perforateur.

3. Appareil destiné au travail du sol conforme à l'une des revendications précédentes,
**caractérisé en ce que**
la transmission (33) est articulée sur le dispositif d'articulation d'un outil perforateur (30) pour transmettre le mouvement de pivotement entre le bras support et ce dispositif d'articulation et permettre un déplacement commun de ces éléments, cette transmission étant au moins formée des éléments suivants :
une tringle (35) rigide en fonctionnement, active essentiellement parallèlement au bras support dans la direction de pivotement, et qui est articulée par un premier point d'articulation (36) sur le dispositif d'articulation d'un outil perforateur pour permettre un déplacement commun de ces éléments, et
un élément de renvoi (38) qui est articulé sur un second point d'articulation (37) de la tringle rigide pour permettre un déplacement commun direct de ces éléments, pour permettre de pré-contraindre, commander, amortir, régler et/ou commander ou effectuer une manipulation similaire du mouvement relatif entre le bras support et le dispositif d'articulation d'un outil perforateur par l'intermédiaire de l'élément de renvoi.

4. Appareil permettant de travailler le sol conforme à la revendication 3,
**caractérisé en ce que**
la longueur active de la tringle rigide est sélectivement réglable et peut être fixée pour le fonctionnement.

5. Appareil permettant de travailler le sol conforme à l'une des revendications précédentes,
**caractérisé en ce que**
la transmission comporte un élément de renvoi (38) permettant de modifier la direction du déplacement relatif, qui est monté pivotant sur le châssis ou le bâti de l'appareil (20) autour d'un troisième axe de pivotement (39) s'étendant essentiellement parallèlement au premier axe de pivotement (26) et essentiellement parallèlement au second axe de pivotement.

6. Appareil permettant de travailler le sol conforme à la revendication 5,
**caractérisé en ce que**
le troisième axe de pivotement (39) s'étend essentiellement concentriquement au premier axe de pivotement (26).

7. Appareil permettant de travailler le sol conforme à l'une des revendications précédentes,
**caractérisé en ce que**
la transmission comporte au moins un palier de rotation ou de pivotement (75) ayant un axe de palier coïncidant avec le premier axe de pivotement (26) pour permettre de monter la transmission (33) par rapport au châssis (20) de l'appareil, ce palier (75) comprenant deux éléments de palier mobiles en rotation l'un par rapport à l'autre dont l'un est relié au bras support (25) associé pour permettre un déplacement commun avec ce bras.

8. Appareil permettant de travailler le sol conforme à l'une des revendications 3 à 6 et à la revendication 7,
**caractérisé en ce que**
l'élément de renvoi (34) est monté sur le palier de rotation ou de pivotement (75).

9. Appareil permettant de travailler le sol conforme à l'une des revendications précédentes,
**caractérisé en ce que**
la transmission (33) forme essentiellement, avec le bras support (25) et le dispositif d'articulation d'un outil perforateur (30) un guidage par parallélogramme par lequel peut s'exercer le déplacement relatif entre le bras support et le dispositif d'articulation d'un outil perforateur (30) essentiellement indépendamment de la position et/ou du déplacement vers le haut et vers le bas du bras support.

10. Appareil permettant de travailler le sol conforme à la revendication 9 et à la revendication 3,
**caractérisé en ce que**
le dispositif d'articulation (30) d'un outil perforateur, le bras support (25), la tringle (35) et l'élément de renvoi (38) forment au moins approximativement un guidage par parallélogramme, lors d'un pivotement du dispositif d'articulation d'un outil perforateur, l'élément de renvoi se déplaçant solidairement avec ce dispositif de sorte que ce pivotement puisse s'exercer sur cet élément de renvoi.

11. Appareil permettant de travailler le sol conforme à l'une des revendications précédentes,
**caractérisé en ce que**
sur la transmission (33), en particulier sur l'élément de renvoi (38), vient en prise un dispositif de manipulation (34) permettant de manipuler, en particulier de pré-contraindre, de commander, de contrôler, de régler, de limiter, de réguler et/ou d'amortir le mouvement relatif entre le bras support (25) et le dispositif d'articulation (30) d'un outil perforateur.

12. Appareil permettant de travailler le sol conforme à la revendication 11,
**caractérisé en ce que**
le dispositif de manipulation (34) est monté à l'extérieur d'une zone d'encrassement (80) qui est exposée à un encrassement par les salissures produites lors du travail du sol.

13. Appareil permettant de travailler le sol conforme à la revendication 11 ou 12,
**caractérisé en ce que**
le dispositif de manipulation (34) n'est pas monté de manière à se déplacer solidairement avec le bras support mais est fixe par rapport au châssis ou au bâti (20) de l'appareil.

14. Appareil permettant de travailler le sol conforme à l'une des revendications 11 à 13,
**caractérisé en ce que**
le dispositif de manipulation (34) est monté à l'extérieur du volume de déplacement du bras support qui est sollicité en permanence transversalement à la direction de déplacement par l'appareil, du fait du déplacement vers le haut et vers le bas des bras support (25) et des dispositifs d'articulation (30) d'outils perforateurs articulés sur ces bras.

15. Appareil de traitement du sol conforme à l'une des revendications 11 à 14,
**caractérisé en ce que**
le dispositif de manipulation (34) est monté à l'extérieur du volume de déplacement du dispositif d'entrainement (27).

16. Appareil de traitement du sol conforme à l'une des revendications 11 à 15
**caractérisé en ce que**
le dispositif de manipulation (34) comporte un dispositif de précontrainte (41, 47, 53, 54, 56, 67, 68) permettant de pré-contraindre la tringlerie (33), en particulier l'élément de renvoi (38), et par suite le dispositif d'articulation d'un outil perforateur (30), ainsi qu'une butée (48, 43) contre laquelle en fonctionnement la tringlerie, en particulier l'élément de renvoi est précontraint par le dispositif de précontrainte.

17. Appareil permettant le traitement du sol conforme à l'une des revendications 11 à 16,
**caractérisé en ce que**
le dispositif de manipulation (34) comporte un dispositif de réglage angulaire (51, 45, 46, 60) permettant de régler l'angle d'enfoncement de l'outil perforateur (32) associé.

18. Appareil permettant le traitement du sol conforme à la revendication 17,
**caractérisé en ce que**
le dispositif de réglage angulaire (60) agit sur tous ou sur un groupe de dispositifs d'articulation (30) d'un outil perforateur.

19. Appareil de traitement du sol conforme à l'une des revendications 11 à 18,
**caractérisé en ce que**
le dispositif de manipulation (34) comporte un élément d'amortissement (49, 66, 43, 68) permettant d'amortir le déplacement relatif après extraction de l'outil perforateur du sol.

20. Appareil permettant le traitement du sol conforme à la revendication 19,
**caractérisé en ce que**
l'élément d'amortissement comporte un amortisseur hydraulique (68).

21. Appareil permettant le traitement du sol conforme à la revendication 20,
**caractérisé en ce que**
l'amortisseur hydraulique (68) est monté sur un raccord de fluide (69) pour permettre un réglage.

22. Appareil permettant le traitement du sol conforme à l'une des revendications précédentes,
**caractérisé en ce qu'**
il ne comporte pas de dispositif de précontrainte se déplaçant vers le haut et vers le bas avec le bras support (25) pour permettre de pré-contraindre le dispositif d'articulation d'un outil perforateur relativement au bras support, et aucune butée se déplaçant vers le haut et vers le bas avec le bras support pour le dispositif d'articulation d'un outil perforateur.

23. Appareil permettant le traitement du sol conforme à la revendication 7,
**caractérisé en ce que**
le palier est un palier à roulement (75), une couronne de circulation interne étant montée sur un boulon dépassant du bras support concentriquement au premier axe de pivotement (26) et, se déplaçant solidairement en rotation lors du pivotement du bras support autour du premier axe de pivotement, et, sur une couronne de circulation externe étant logé un élément de renvoi (74, 38) de la transmission de sorte qu'il puisse pivoter autour du premier axe de pivotement en particulier pour permettre de régler la position de la butée.
